(19) **Europäisches Patentamt / European Patent Office / Office européen des brevets**

(11) **EP 1 080 049 B2**

(12) **NOUVEAU FASCICULE DE BREVET EUROPEEN**
Après la procédure d'opposition

(45) Date de publication et mention de la décision concernant l'opposition:
**14.07.2010 Bulletin 2010/28**

(45) Mention de la délivrance du brevet:
**10.09.2003 Bulletin 2003/37**

(21) Numéro de dépôt: **99918063.1**

(22) Date de dépôt: **12.05.1999**

(51) Int Cl.:
*C04B 28/02* *(2006.01)*    *C04B 16/06* *(2006.01)*
*C04B 40/00* *(2006.01)*    *C04B 28/02* *(2006.01)*
*C04B 14/06* *(2006.01)*    *C04B 14/20* *(2006.01)*
*C04B 14/38* *(2006.01)*    *C04B 16/06* *(2006.01)*
*C04B 18/08* *(2006.01)*    *C04B 20/10* *(2006.01)*
*C04B 28/02* *(2006.01)*    *C04B 14/06* *(2006.01)*
*C04B 14/20* *(2006.01)*    *C04B 14/38* *(2006.01)*
*C04B 16/06* *(2006.01)*    *C04B 18/14* *(2006.01)*
*C04B 20/10* *(2006.01)*

(86) Numéro de dépôt international:
**PCT/FR1999/001145**

(87) Numéro de publication internationale:
**WO 1999/058468 (18.11.1999 Gazette 1999/46)**

(54) **BETON COMPORTANT DES FIBRES ORGANIQUES DISPERSEES DANS UNE MATRICE CIMENTAIRE, MATRICE CIMENTAIRE DU BETON ET PREMELANGES**

IN EINER ZEMENTMATRIX DISPERGIERTE ORGANISCHE FASERN ENTHALTEND BETON, BETON-ZEMENTMATRIX UND VORMISCHUNGEN

CONCRETE COMPRISING ORGANIC FIBRES DISPERSED IN A CEMENT MATRIX, CONCRETE CEMENT MATRIX AND PREMIXES

(84) Etats contractants désignés:
**AT BE CH CY DE DK ES FI FR GB GR IE IT LI LU MC NL PT SE**
Etats d'extension désignés:
**LT LV RO SI**

(30) Priorité: **14.05.1998 FR 9806092**

(43) Date de publication de la demande:
**07.03.2001 Bulletin 2001/10**

(73) Titulaires:
- **BOUYGUES**
  **78190 Saint-Quentin en Yvelines (FR)**
- **LAFARGE**
  **75116 Paris (FR)**

(72) Inventeurs:
- **CHEYREZY, Marcel**
  **F-92310 Sèvres (FR)**
- **DUGAT, Jérôme**
  **F-78180 Montigny le Bretonneux (FR)**
- **BOIVIN, Sandra**
  **F-38080 L'Isle d'Abeau (FR)**
- **ORANGE, Gilles**
  **F-95230 Soisy sous Montmorency (FR)**
- **FROUIN, Laurent**
  **F-94240 L'Hay les Roses (FR)**

(74) Mandataire: **Pochart, François**
**Hirsch & Associés**
**58, Avenue Marceau**
**75008 Paris (FR)**

(56) Documents cités:
**EP-A1- 0 220 649    EP-A1- 0 225 932**
**EP-A2- 0 718 252    WO-A1-87/07597**
**WO-A1-95/01316    FR-A1- 2 704 853**
**GB-A- 2 259 700    US-A- 5 108 679**
**US-A- 5 503 670**

- **CHEMICAL ABSTRACTS, vol. 112, no. 22, 28 mai 1990 (1990-05-28) Columbus, Ohio, US; abstract no. 203792p, B. MAGYARI, ET AL.: page 330; XP000156863 & HU 49 555 A2 (ID.)**
- **CHEMICAL ABSTRACTS, vol. 118, no. 6, 8 février 1993 (1993-02-08) Columbus, Ohio, US; abstract no. 44482t, T. TAKADA, ET AL.: page 362; XP000352498 & JP 04 300229 A (ID)**
- **CHEMICAL ABSTRACTS, vol. 114, no. 4, 28 janvier 1991 (1991-01-28) Columbus, Ohio, US; abstract no. 29129g, H. KUBOI ET AL.: page 315; XP000188168 & JP 02 107546 A (ID.)**
- **CHEMICAL ABSTRACTS, vol. 114, no. 8, 25 février 1991 (1991-02-25) Columbus, Ohio, US; abstract no. 68043u, T. SAKURAI, ET AL: page 379; XP000192666 & JP 02 124753 A (ID.)**

- **VICTOR C.LI, DHANADA K, MISHRA, HWAI-CHUNG WU: 'Matrix design for pseudo-strain-hardening fibre...' MATERIALS AND STRUCTURES 1995, pages 586 - 595**
- **Shao y. Et al.,ACI Materials Journal, Vol. 94/69, 1997, 555-564**
- **Acker P. "Ingegnerie de la construction...", La Jaune et la Rouge, N.614, 2006, pp11-15**
- **Note technique brevet Ductal F.O. LCR 2005-03, Lafarge Centre de recherche,2005,pp. 1-20**

**Description**

La présente invention a trait à un nouveau béton de fibres permettant de fabriquer des éléments de structures et ayant des propriétés supérieures à celles des éléments de la technique antérieure, notamment en ce qui concerne le comportement en tension (flexion et traction directe). Les fibres utilisées sont des fibres organiques.

Une analyse structurelle des bétons a montré que leurs propriétés mécaniques sont étroitement liées à la présence de défauts de structure. Plusieurs types de défauts de structure peuvent être observés dans ces bétons lorsqu'ils sont soumis à des charges mécaniques. Ils se différencient par leur taille.

A l'échelle la plus faible, on observe le défaut dit de microporosité du béton. Il s'agit de pores, dits capillaires, issus des espaces intergranulaires initialement présents dans la pâte fraîche. Leur taille varie entre 50 nanomètres et quelques micromètres.

A une échelle intermédiaire, on observe les défauts de microfissuration. Il s'agit de microfissures présentant des ouvertures allant de 1 à 100 micromètres. Elles sont non coalescentes, c'est-à-dire qu'elles ne forment pas un chemin continu à travers la structure. Elles sont principalement dues au caractère hétérogène du béton, les granulats présentant des propriétés mécaniques et physiques différentes de celles du liant/ciment. Elles apparaissent lors de chargement mécanique. Ce type de défaut est un responsable majeur des faibles propriétés mécaniques du béton en traction et de son caractère fragile.

A l'échelle supérieure, on observe les défauts de macrofissuration. L'ouverture de ces fissures varie de 100 $\mu$m à 1 mm. Ces fissures sont coalescentes.

On peut également observer des défauts majeurs de taille millimétrique qui sont dus à une mauvaise préparation du béton (air occlus, défauts de remplissage).

Des solutions ont été apportées soit pour diminuer la présence de ces différents défauts, soit pour atténuer leurs effets.

Ainsi, la microporosité a pu être partiellement contrôlée en diminuant le rapport en poids eau sur ciment, et en utilisant des fluidifiants. L'utilisation de charges fines, notamment à réaction pouzzolanique, a permis également de réduire la taille des micropores.

La microfissuration a, elle, été fortement réduite par:

- l'amélioration de l'homogénéité du béton, en limitant par exemple la taille des granulats à 800 $\mu$m,
- l'amélioration de la compacité du matériau (optimisation granulaire et pressage éventuel avant et pendant la prise),
- des traitements thermiques après prise.

Quant à la macrofissuration, elle a été contrôlée par l'utilisation de fibres métalliques.

A titre de document illustratif de la technique antérieure, on peut citer la demande de brevet WO-A-95/01316. Elle consiste à contrôler le rapport des tailles entre des fibres métalliques et les éléments granulaires (sable, granulats). Ce béton de fibres amélioré comprend du ciment, des éléments granulaires, des éléments fins à réaction pouzzolanique et des fibres métalliques. Les éléments granulaires doivent présenter une grosseur de grain maximale D d'au plus 800 micromètres, les fibres doivent présenter une longueur individuelle I comprise entre 4 et 20 mm, et le rapport R entre la longueur moyenne L des fibres et D doit au moins être égal à 10.

Le béton obtenu présente un comportement ductile ou de pseudo-écrouissage en flexion.

On a également proposé à diverses fins des formulations de béton ou de mortier comportant des fibres organiques, éventuellement conjuguées à des fibres métalliques, comme cela est exposé par exemple dans la publication «Fibre reinforced cementitious composites» de A.BENTUR, S.MINDESS (Elsevier Applied Science, 1990).

L'état de la technique révèle que l'homme du métier qui cherche à formuler un béton de fibres est confronté à de multiples choix possibles de matières et de dosages, aussi bien en ce qui concerne la matrice cimentaire du béton que les fibres, en sorte que le problème reste toujours posé de formuler un béton qui présente des propriétés améliorées par rapport aux bétons existants et dont le coût ne soit pas rédhibitoire pour son utilisation effective dans l'industrie du bâtiment et des travaux publics.

Une réponse aux propriétés recherchées se situe au niveau de l'utilisation de fibres organiques à la place des fibres métalliques : accroissement de la ductilité notamment en traction, réduction des effets de corrosion, diminution du poids des structures en béton fibré. On peut également citer une moins grande atténuation des signaux radioélectriques.

Un effet intéressant apporté par la présence de fibres de renforcement de type polymère est un comportement au feu amélioré des bétons fibres.

Une autre voie complémentaire se situe au niveau de l'élimination des défauts précités, et notamment des microfissurations, car il a pu être observé que les mises en oeuvre décrites dans l'art antérieur servent principalement à éviter le développement des macrofissures et non des microfissures : les microfissures ne sont pas stabilisées et se développent sous l'effort.

La présente invention a pour objet un béton contenant des fibres organiques de renfort et possédant des propriétés améliorées par rapport aux bétons de la technique antérieure, notamment en tension (flexion et traction directe).

Un autre but de la présente invention est de fournir un béton dont l'écrouissage est amélioré au delà du premier endommagement en contrôlant la propagation des macrofissures. L'invention se propose ainsi d'accroître le domaine d'utilisation du béton au-delà du premier endommagement en conférant un comportement ductile au béton.

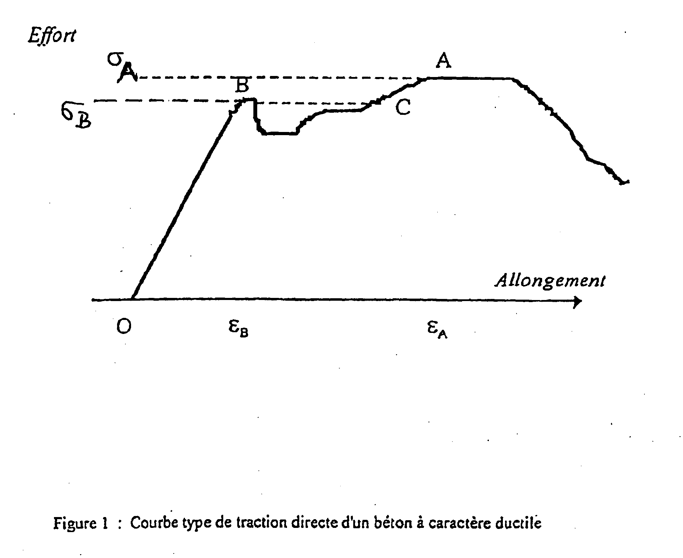

La figure 1 des dessins annexés est une courbe type de traction directe d'un béton à caractère ductile de la technique antérieure.

Dans le cas d'une rupture qui n'est pas de type fragile (fragile signifie ici que la rupture est brutale, non progressive), l'ingénieur qui conçoit une structure, comme celui qui la calcule ou doit en vérifier la sécurité, a besoin d'avoir accès à la loi de comportement du matériau, ou d'une caractéristique qui en rende compte. La ductilité du matériau correspond uniquement à la déformation non élastique qui se produit, en traction directe, avant le pic de contrainte A.

Pour illustrer l'intérêt de la ductilité, il suffit d'imaginer le comportement d'un tirant (une suspente, par exemple, encastrée à son extrémité supérieure), soumis à une force de traction croissante (des poids ajoutés à l'extrémité inférieure). Dès que cette force atteint la valeur du pic, la rupture intervient et elle est complète (dans l'essai de traction directe, d'ailleurs, la partie post-pic ne peut être observée que si l'essai est piloté en déformation).

La ductilité d'un matériau non élastique est caractérisée par l'ensemble de la courbe effort-déformation en traction simple, mais prise seulement jusqu'au pic. Elle peut aussi être définie comme le quotient de la déformation à la rupture $\varepsilon_A$ par la déformation élastique $\varepsilon_{el} = \varepsilon_B \cdot \dfrac{\sigma_A}{\sigma_B}$ correspondant à la contrainte de rupture (à condition que $\sigma_A$ soit supérieur à $\sigma_B$) ; ce rapport est égal à celui du module élastique (pente de OB) divisé par le module sécant à la rupture (contrainte au pic divisée par déformation au pic, ou pente de OA).

La ductilité peut se décrire au moyen d'un coefficient de ductilité $\delta$ :

$$\delta = \frac{\varepsilon_A \cdot \sigma_B}{\varepsilon_B \cdot \sigma_A} \text{ si } \sigma_A \geq \sigma_B$$

$$\delta = 1 \text{ si } \sigma_A < \sigma_B$$

où $\varepsilon_A$ = déformation au pic, et

$$\varepsilon_{el} = \varepsilon_B \cdot \frac{\sigma_A}{\sigma_B}$$

avec $\varepsilon_{el}$ = déformation qu'on aurait sous l'effort du pic en extrapolant élastiquement la déformation obtenue sous la contrainte de service.

Cette définition est parfaitement cohérente avec le comportement physique observé sur éprouvette (multifissuration) : lors de la formation de la première fissure, on atteint, localement, le pic B (qui n'est qu'un maximum local, ou partiel) dit de première fissuration, suivi d'une ouverture que l'on peut lire sur la figure 1 entre le premier pic B et le point C où la courbe remonte au-dessus de la valeur de ce pic; à ce moment la première fissure se stabilise parce que la contrainte augmente à nouveau dans tout le volume tendu, jusqu'à l'apparition d'un seconde fissure, etc. Ce comportement est robuste, car il ne peut être que plus stable dans des volumes de taille plus grande.

Un autre but de la présente invention est d'augmenter le niveau de contrainte où apparaît le premier endommagement du béton (c'est-à-dire les microfissurations) et ainsi d'accroître le domaine d'utilisation du béton (comportement linéaire élastique).

Un autre but également de l'invention est d'améliorer, par un effet de synergie entre la matrice cimentaire et les fibres organiques, le comportement du béton à la fois vis à vis de l'apparition des microfissures et de la propagation de macrofissures.

On a découvert que les buts de l'invention étaient atteints avec un béton combinant une matrice cimentaire de caractéristiques déterminées et des fibres organiques également de caractéristiques déterminées.

Plus précisément, sous sa forme générale, l'invention a pour objet un béton constitué d'une matrice cimentaire durcie dans laquelle sont dispersées des fibres organiques, provenant du mélange avec de l'eau d'une composition comprenant outre les fibres organiques :

(a) du ciment
(b) des éléments granulaires;
(c) des éléments fins à réaction pouzzolanique;
(d) au moins un agent dispersant;

et caractérisé en ce que:

(1) les éléments granulaires (b) sont présents à raison de 20 à 60% en poids de matrice cimentaire et ont une grosseur de grain maximale D d'au plus 2 mm, de préférence d'au plus 1 mm;
(2) les éléments fins à réaction pouzzolanique (c) ont une taille de particule élémentaire d'au plus 20 $\mu$m, de préférence d'au plus 1 $\mu$m ;
(3) le pourcentage en poids de l'eau par rapport au poids cumulé du ciment (a) et des éléments (c) est compris entre 8 et 25% ;
(4) les fibres organiques sont des fibres d'alcool polyvinylique, des fibres de polyacrylonitrile, des fibres de polyéthylène, des fibres de polyéthylène haute densité, des fibres de polyamide ou de polyimide, des fibres de polypropylène (homo ou copo), ou encore des mélanges de ces fibres et présentent une longueur individuelle $\ell$ d'au moins 2 mm et un rapport $\ell/\Phi$, $\Phi$ étant le diamètre des fibres, d'au moins 20;
(5) la quantité de fibres est telle que leur volume représente de 1% à au plus 8 % du volume du béton après la prise;
(6) le rapport R entre la longueur moyenne L des fibres et la grosseur de grain maximale D des éléments granulaires est d'au moins 5.

Ainsi, grâce à une conception nouvelle du squelette granulaire et de sa relation avec les fibres de renforts, cette solution répond au problème posé avec ce compromis propriétés mécaniques/rhéologie.
On ne change pas sensiblement les propriétés du béton selon l'invention, si on utilise également au sein de la matrice des éléments granulaires (b) de grosseur de grain dépassant 2 mm, mais dans une proportion qui ne dépasse pas 25% du volume de l'ensemble des constituants (a) + (b) + (c).
La présence de cette classe granulaire dans une telle proportion peut être considérée comme une charge qui ne participe pas aux performances mécaniques du matériau dans la mesure où:

- la taille de grain D50 de l'ensemble des constituants (a), (b) et (c) est d'au plus 200 $\mu$m, de préférence d'au plus 150 $\mu$m, et
- le rapport R entre la longueur moyenne L des fibres et la taille des grains D75 de l'ensemble des constituants (a), (b) et (c) est d'au moins 5, de préférence d'au moins 10.

Par taille des grains D75 et D50, on entend respectivement les tailles des tamis dont le passant constitue respectivement 75% et 50% du volume total des grains.
L'invention concerne donc également un béton constitué d'une matrice cimentaire durcie dans laquelle sont dispersées des fibres organiques, provenant du mélange avec de l'eau d'une composition comprenant, outre les fibres:

(a) du ciment;
(b) des éléments granulaires;
(c) des éléments à réaction pouzzolanique ayant une taille de particules élémentaires d'au plus 1 $\mu$m, de préférence d'au plus 0,5$\mu$m;
(d) au moins un agent dispersant;

et répondant aux conditions suivantes:

(1) le pourcentage en poids de l'eau E par rapport au poids cumulé C du ciment (a) et des éléments (c) est compris dans la gamme 8-24%;
(2) les fibres présentent une longueur individuelle I d'au moins 2 mm et un rapport I/$\phi$, $\phi$ étant le diamètre des fibres, d'au moins 20;
(3) le rapport R entre la longueur moyenne L des fibres et la taille de grain D75 de l'ensemble des constituants (a), (b) et (c) est d'au moins 5, de préférence d'au moins 10;
(4) la quantité de fibres est telle que leur volume est au plus de 8% du volume du béton après la prise;
(5) l'ensemble des constituants (a), (b) et (c) présente une taille de grain D75 d'au plus 2 mm, de préférence d'au plus 1 mm, et une taille de grain D50 d'au plus 150 $\mu$m, de préférence d'au plus 100 $\mu$m.

Les conditions (3) et (5) s'appliquent à tous les constituants solides (a), (b) et (c) confondus, hors fibres, et non pour chacun pris individuellement.

Dans une variante, une partie des fibres organiques est substituée par des fibres métalliques : on obtient alors un composite 'hybride' dont le comportement mécanique peut être adapté en fonction des performances recherchées (partie élastique et écrouissante / partie post-pic).

La présence de fibres organiques permet de modifier le comportement au feu du béton tel que défini précédemment.

En effet, la nature fusible de ces fibres permet, lors d'une élévation importante de température, de développer des chemins par lesquels la vapeur ou l'eau sous pression peut s'échapper.

Les fibres organiques sont choisies parmi les fibres d'alcool polyvinylique (APV), les fibres de polyacrylonitrile (PAN), les fibres de polyéthylène (PE), les fibres de polyéthylène haute densité (PEHD), les fibres de polypropylène (PP), homo ou copo, les fibres de polyamide ou polyimide. Des mélanges de ces fibres peuvent également être utilisés. Les fibres de renfort utilisées par l'invention peuvent être choisies parmi les diverses fibres disponibles sur le marché et pouvant être classées dans l'une des trois catégories suivantes: les fibres non réactives à haut module, les fibres non réactives à bas module et les fibres réactives. Les exemples illustratifs ci-après concernent notamment les fibres PEHD non réactives, dont le module est supérieur à celui de la matrice béton, les fibres polyamides (PA) non réactives, dont le module est inférieur à celui de la matrice béton et les fibres APV réactives avec la matrice béton.

Les renforts « hybrides » peuvent être réalisés par association de fibres de natures et/ou de longueurs différentes. Les exemples illustratifs ci-après concernent notamment des fibres organiques APV courtes (6mm) et des fibres métalliques longues (13 mm) et montrent qu'un effet de synergie remarquable de renforcement est alors obtenu. D'autres exemples d'associations similaires sont les suivants:

fibres courtes APV ou PEHD (6 mm) et fibres longues APV (20 mm);
fibres courtes acier (5 mm) et fibres longues APV (20 mm).

Ces fibres organiques peuvent se présenter sous forme d'objet constitué soit de monobrin, soit de multibrins, le diamètre de l'objet allant de 10 microns à 800 microns. Les fibres organiques peuvent également être utilisées sous forme de structures tissées ou non tissées ou de toron hybride (mélange de filaments).

La longueur individuelle des fibres organiques est de préférence comprise entre 5 et 40 mm.

La quantité de fibres est telle que leur volume est inférieur à 8%, et de préférence à 5% du volume du béton après la prise.

Le rapport $l/\phi$, $\phi$ étant le diamètre des fibres est d'au moins 20 et, de préférence d'au plus 500.

Les essais ont montré que même une quantité de fibres conduisant à un volume aussi faible que 1% pouvait être efficace, compte tenu de la formulation de la matrice.

De fait, les dosages utiles sont très dépendants de la géométrie des fibres, de leur nature chimique et de leurs propriétés mécaniques intrinsèques (module élastique, seuil d'écoulement, résistance mécanique).

Le recours à des mélanges de fibres de caractéristiques différentes permet d'adapter les propriétés du béton par rapport aux caractéristiques recherchées.

Avantageusement, la contrainte d'adhérence moyenne des fibres dans la matrice cimentaire doit être d'au moins 2 MPa, de préférence d'au moins 5 MPa, selon la nature des fibres.

Cette contrainte est déterminée par essai d'extraction d'une monofibre encastrée dans un bloc de béton, ainsi qu'il sera décrit ci-après.

Le niveau d'adhérence fibre/matrice peut être contrôlé par plusieurs méthodes que l'on peut mettre en oeuvre individuellement ou simultanément.

L'adhérence des fibres dans la matrice cimentaire peut être obtenue par réactivité entre la fibre et la matrice cimentaire, réactivité qui peut être amplifiée par les traitements thermiques effectués sur le béton (cure) ou par des traitements de surface des fibres.

Selon une deuxième méthode, la contrainte d'adhérence des fibres dans la matrice cimentaire peut être obtenue par introduction dans la composition d'au moins un des composés suivants : les composés de la silice comprenant majoritairement de la silice, du carbonate de calcium précipité, de l'alcool polyvinylique en solution aqueuse, des phosphates, des latex, un tensioactif (démoussant, agent mouillant ou similaire) ou un mélange desdits composés.

Par composés de la silice comprenant majoritairement de la silice, on entend ici les produits de synthèse choisis parmi les silices de précipitation, les sols de silice, les silices de pyrogénation (type aérosil), les silico-aluminates, par exemple le Tixosil 28 commercialisé par RHODIA Chimie, ou les produits obtenus par attaque de produits naturels type argile : les smectites, les silicates de magnésium, les sépiolites, les montmorillonites.

On utilise de manière préférée au moins une silice de précipitation.

Par silice de précipitation, on entend ici une silice obtenue par précipitation à partir de la réaction d'un silicate de métal alcalin avec un acide, en général inorganique, à un pH adéquat du milieu de précipitation, en particulier un pH basique, neutre ou peu acide.

En général, la quantité de silice de précipitation introduite est comprise entre 0,1 et 5 % en poids, exprimé en sec, par rapport à la composition totale du béton. Au delà de 5 %, on observe habituellement des problèmes de rhéologie lors la préparation du béton.

De préférence, la silice de précipitation est introduite dans la composition sous forme d'une suspension aqueuse. Il peut notamment s'agir d'une suspension aqueuse de silice présentant :

- une teneur en matière sèche comprise entre 10 et 40 % en poids,
- une viscosité inférieure à $4.10^{-2}$ Pa.s pour un cisaillement de $50s^{-1}$,
- une quantité de silice contenue dans le surnageant de ladite suspension à 7500 trs/min pendant 30 min de plus de 50 % du poids de la silice contenu dans la suspension.

Cette suspension est plus particulièrement décrite dans la demande de brevet WO-A-96/01787. La suspension de silice Rhoximat 60 SL commercialisée par RHODIA Chimie convient particulièrement pour ce type de béton.

Avantageusement, la matrice du béton contient également des constituants capables d'améliorer la ténacité de la matrice, choisis parmi des éléments aciculaires ou plaquettaires ayant une taille moyenne d'au plus 1 mm, et présents dans une proportion volumique comprise entre 2,5 et 35% du volume cumulé des éléments granulaires (b) et des éléments pouzzolaniques (c). De préférence, la ténacité de la matrice est d'au moins 15 $J/m^2$, avantageusement d'au moins 20 $J/m^2$.

Par "matrice cimentaire", on désigne la composition cimentaire durcie hors fibres.

Les éléments granulaires sont essentiellement des sables fins ou des mélanges de sables fins, tamisés ou broyés, pouvant avantageusement comprendre des sables siliceux, en particulier de la farine de quartz.

La grosseur maximale D de ces éléments est de préférence d'au plus 1 mm ou d'au plus 500 $\mu$m.

Ces éléments granulaires sont présents à raison de 20 à 60% en poids de la matrice cimentaire, de préférence de 25% à 50% en poids de ladite matrice.

Le rapport R entre la longueur moyenne L des fibres et la grosseur de grain maximale D des éléments granulaires est d'au moins 5, notamment lorsque les éléments granulaires présentent une grosseur de grain maximale de 1 mm.

Le ciment de la composition selon l'invention est avantageusement un ciment Portland tel que les ciments Portland CPA PMES, HP, HPR, CEM I PMES, 52,5 ou 52,5R ou HTS (haute teneur en silice).

Les éléments fins à réaction pouzzolanique présentent une taille de particule élémentaire d'au moins 0,1 $\mu$m, et d'au plus 20 $\mu$m, de préférence d'au plus 0,5 $\mu$m. Ils peuvent être choisis parmi les silices telles que les cendres volantes, les laitiers de hauts-fourneaux, les dérivés d'argiles tels que le kaolin. La silice peut être une fumée de silice provenant de l'industrie du zirconium plutôt qu'une fumée de silice provenant de l'industrie du silicium.

Le pourcentage en poids eau/ciment de la composition selon l'invention peut varier lorsque l'on utilise des substituts du ciment, notamment des éléments à réaction pouzzolanique. Le taux d'eau est défini par le rapport pondéral de la quantité d'eau E vis à vis du poids cumulé du ciment et des éléments à réaction pouzzolanique : il varie entre 8 et 25% environ ou entre 13 et 25%.

La composition selon l'invention comprend également un agent dispersant. Cet agent dispersant est en général un agent fluidifiant. L'agent fluidifiant peut être choisi parmi : les lignosulfonates, la caséine, les polynaphtalènes, en particulier les polynaphtalènesulfonates de métaux alcalins, les dérivés du formaldéhyde, les polyacrylates de métaux alcalins, les polycarboxylates de métaux alcalins et les polyoxydes d'éthylène greffés. En général, la composition selon l'invention comprend entre 0,5 et 2,5 parties en poids d'agent fluidifiant pour 100 parties en poids de ciment.

D'autres additifs peuvent être ajoutés dans la composition selon l'invention, par exemple un agent antimousse. A titre d'exemple, on peut citer notamment les antimousses à base de polydiméthylsiloxanes.

Parmi ce type d'agents, on peut citer notamment les silicones sous la forme d'une solution, d'un solide, et de préférence sous la forme d'une résine, d'une huile ou d'une émulsion, de préférence dans l'eau. Conviennent tout particulièrement les silicones comprenant essentiellement des motifs M ($RSiO_{0,5}$) et D ($R_2SiO$). Dans ces formules, les radicaux R, identiques ou différents, sont plus particulièrement choisis parmi l'hydrogène et les radicaux alkyles comprenant 1 à 8 atomes de carbone, le radical méthyle étant préféré. Le nombre de motifs est de préférence compris entre 30 et 120.

La quantité d'un tel agent dans la composition est généralement d'au plus 5 parties en poids pour 100 parties de ciment. Toutes les tailles de particules sont mesurées par MET (microscopie électronique en transmission) ou MEB (microscopie électronique par balayage).

On prépare le béton selon toute méthode connue de l'homme du métier, notamment par gâchage des constituants solides et de l'eau, mise en forme (moulage, coulage, injection, pompage, extrusion, calandrage) puis durcissement.

Le béton obtenu peut être soumis à une cure pendant la durée nécessaire à l'obtention des caractéristiques mécaniques désirées à une température comprise entre l'ambiante et 100°C, notamment une cure entre 60 et 100°C. La durée de la cure peut être comprise entre 6 heures et 4 jours avec une durée optimale de l'ordre de 2 jours, la cure

EP 1 080 049 B2

commençant après la fin de la prise du mélange ou au moins un jour après le début de la prise.

La cure est réalisée en ambiance sèche ou humide ou suivant des cycles faisant alterner les deux ambiances, par exemple 24 heures de cure en ambiance humide suivies de 24 heures de cure en ambiance sèche.

On met en oeuvre cette cure sur des bétons ayant terminé leur prise, de préférence âgés d'au moins un jour, et encore mieux âgés d'au moins 7 jours environ.

L'addition de poudre de quartz est particulièrement utile lorsque le béton est curé à haute température.

Les bétons obtenus selon la présente invention présentent en général une résistance en traction directe Rt d'au moins 6 MPa, avec un comportement pouvant présenter une certaine ductilité.

Ils peuvent également présenter une résistance en flexion 4 points Rf d'au moins 20 MPa, une résistance à la compression Rc d'au moins 140 MPa et une énergie de rupture Wf d'au moins 2.000 J/m$^2$.

La ténacité de la matrice cimentaire est en particulier obtenue par ajout à la composition cimentaire de renforts de forme anisotrope et de taille moyenne d'au plus 1 mm, de préférence d'au plus 500 $\mu$m.

En général, les renforts de la composition selon l'invention se présentent sous une forme aciculaire ou sous forme de plaquettes.

Par "taille" des microrenforts, on entend la taille moyenne de leur dimension la plus grande (notamment la longueur pour les formes aciculaires).

Il peut s'agir de produits naturels ou de synthèse.

Les renforts de forme aciculaire peuvent être choisis parmi les fibres de wollastonite, les fibres de bauxite, les fibres de mullite, les fibres de titanate de potassium, les fibres de carbure de silicium, les fibres de phosphates notamment de calcium, en particulier hydroxyapatite (HAP), les fibres de cellulose ou ses dérivés, les fibres de carbone, les fibres de carbonate de calcium, les fibres de verre (alcali-résistantes). Des fibres courtes (longueur d'au plus 2 mm, de préférence d'au plus 1 mm) d'alcool polyvinylique, de polyacrylonitrile, de polyéthylène haute densité, de polyamide, d'aramide ou de polypropylène peuvent également être utilisées. Entrent également dans la définition des renforts selon l'invention, des matériaux tels que la laine d'acier.

Les renforts sous forme de plaquettes peuvent être choisis parmi les plaquettes de mica, les plaquettes de talc, les plaquettes de silicates mixtes (argiles), les plaquettes de vermiculite, les plaquettes d'alumine.

Il est possible d'utiliser un mélange de ces différentes formes ou natures de microrenforts dans la composition du béton selon l'invention.

Ces renforts peuvent présenter en surface un revêtement organique polymérique obtenu à partir d'au moins un des composants suivants: alcool polyvinylique, silanes, siliconates, résines siloxanes ou polyorganosiloxanes ou les produits de la réaction entre (i) au moins un acide carboxylique contenant 3 à 22 atomes de carbone, (ii) au moins une amine aromatique ou aliphatique polyfonctionnelle ou amine substituée, contenant de 2 à 25 atomes de carbone, et (iii) un agent de réticulation qui est un complexe de métal hydrosoluble, contenant au moins un métal choisi parmi: le zinc, l'aluminium, le titane, le cuivre, le chrome, le fer, le zirconium et le plomb.

L'épaisseur de ce revêtement peut varier entre 0,01 et 10 $\mu$m, de préférence ente 0,1 et 1 $\mu$m.

Les latex peuvent être choisis parmi les latex de styrène-butadiène, les latex acryliques, les latex styrène-acryliques, les latex méthacryliques, les latex carboxylés et phosphonés. Les latex présentant des fonctions complexantes du calcium sont préférés.

Le revêtement organique polymérique peut être obtenu par traitement au lit fluide ou à l'aide d'un mélangeur type FORBERG des renforts en présence d'un des composés définis ci-dessus.

Les composés suivants sont préférés : le polyorganosiloxane H240, les résines siloxanes Rhodorsil 878, 865 et 1830 PX, le Manalox 403/60/WS et WB LS 14 tous commercialisés par RHODIA Chimie, les siliconates de potassium.

Ce type de traitement est particulièrement recommandé pour les renforts qui sont des produits naturels.

Le béton peut être précontraint en pré-tension par fil adhérent ou par toron adhérent, ou précontraint en post-tension par monotorons gainés graissés ou par câble ou barre sous gaine, le câble étant constitué d'un assemblage de fils ou étant constitué de torons.

La précontrainte, qu'elle soit sous forme de pré-tension, ou sous forme de post-tension, est particulièrement bien adaptée à des produits en béton selon l'invention.

En effet, les câbles de précontrainte métalliques ont toujours des résistances à la traction très élevées, mal utilisées, parce que la fragilité de la matrice qui les contient ne permet pas d'optimiser les dimensions des éléments structurels en béton.

Un progrès a déjà été fait avec l'usage de bétons de haute performance; dans le cas du béton selon l'invention, le matériau est renforcé par des fibres organiques ou hybrides de manière homogène lui permettant d'atteindre des performances mécaniques élevées conjointement à une ductilité. La précontrainte de ce matériau au moyen de câbles ou torons, quel qu'en soit le mode, est alors utilisée dans sa quasi totalité, ce qui crée des éléments en béton précontraint très résistants en traction et en flexion et donc optimisés.

La diminution de volume obtenue, du fait de cet accroissement de résistances mécaniques, peut générer des éléments préfabriqués très légers. De ce fait, on a alors la possibilité d'avoir des éléments en béton de grande portée facilement transportables grâce à leur légèreté; ceci est particulièrement bien adapté à la réalisation de grands ouvrages d'art où l'utilisation de la précontrainte par post-tension est largement utilisée. La solution présente alors pour ce type d'ouvrage des gains de montage et des temps de durée de chantier particulièrement favorables.

De plus, le traitement thermique diminue significativement le retrait après cure, ce qui limite les pertes de précontrainte dans le temps.

Cette propriété est particulièrement recherchée et l'ensemble des avantages ci-dessus associés à la très faible perméabilité du produit, très avantageux pour la durabilité et l'entretien des ouvrages d'art dans le temps, font que ce matériau peut valablement se substituer à des ouvrages réalisés en acier.

L'invention concerne également la matrice cimentaire destinée à l'obtention et à la mise en oeuvre du béton défini ci-dessus.

Enfin, l'invention concerne les prémélanges comprenant les constituants nécessaires à la préparation du béton et de la matrice définis ci-dessus.

Les exemples suivants illustrent l'invention sans toutefois en limiter la portée.

**Préparation des échantillons**

**1) Matières premières**

- Ciment Portland : à haute teneur en silice, type HTS (LAFARGE France)
- Sable : sable de quartz BE31 (SIFRACO France)
- Farine de quartz : qualité C400 avec 50% de grains inférieurs à 10 microns (SIFRACO France)
- Fumée de silice : microsilice vitreuse issue de la fabrication du zirconium (SEPR France)
- Adjuvant : superplastifiant liquide X 404 (MAPEI Italie) ou OPTIMA 100 (CHRYSO, France).
- Fibres : Les fibres organiques sont des fibres d'APV (KURARAY RM182, RF1500 et RF 4000, UNITIKA 1800), de PEHD (DSM - Dyneema), ou de PA (FILTEC PAK 50). Elles sont sous forme de monobrin de diamètre 50 à 600 microns pour une longueur allant de 5 à 32 mm. Les dosages utilisés sont de 1% à 5% en volume (par rapport au volume total);
- Elément de renfort aciculaire : wollastonite ($CaSiO_3$) grade NYAD G (NYCO USA).
- Elément de renfort plaquettaire : mica (muscovite) grade MG 160 (KAOLINS D'ARVOR France).

**2) Mode de fabrication**

Les constituants sont malaxés dans l'ordre suivant :

- malaxage des constituants pulvérulents de la matrice et des constituants additionnels
- introduction de l'eau et d'une partie des adjuvants
- malaxage
- introduction de la fraction restante des fluidifiants
- malaxage
- introduction des fibres de renfort
- malaxage

La durée du temps de malaxage dépend fortement du type de malaxeur utilisé (EIRICH, ou HOBART).

Le dégazage peut être facilité par un malaxage à vitesse réduite en fin de procédé.

Les moules sont alors remplis, puis vibrés selon les procédures usuelles.

**3) Cure**

- Mûrissement à 20°C. Les éprouvettes sont démoulées 48h après le coulage. Elles subissent ensuite un traitement consistant à les stocker sous eau à 20°C environ pendant un minimum de 14 jours. Les éprouvettes sont usinées (selon le test à réaliser) 26 à 28 jours après le coulage et le test est réalisé dans les jours suivants.
- Traitement thermique à 90°C. Les éprouvettes sont démoulées 48 heures après le coulage. Elles subissent ensuite un traitement thermique consistant à les stocker en étuve à 90°C 24h en air humide (> 90% HR) puis 24h en air sec. L'usinage éventuel s'effectue 6 jours après le coulage, et le test est réalisé dans les jours suivants (7 jours minimum après le coulage).

## Méthodes de mesure

**Tenue en traction directe : Rt**

Il s'agit de la valeur obtenue en traction directe sur éprouvettes haltères usinées à partir de prismes 70 x 70 x 280 mm afin d'avoir une section utile de 70 x 50 mm$^2$ sur une hauteur de 50 mm. Les éprouvettes, soigneusement alignées, sont montées de façon rigide sur le bâti d'essai (UTS) avec un seul degré de liberté (pas de liaison par rotule type cardan).

$$Rt = \frac{Fmax}{70x50}$$

où Fmax représente la force maximale en N (pic) pour une rupture ayant lieu dans la section centrale 70 x 50.
Coefficient de ductilité : $\delta$
Le coefficient de ductilité $\delta$ est défini par la relation :

$$\delta = \frac{\varepsilon_A \cdot \sigma_B}{\varepsilon_B \cdot \sigma_A} \text{ si } \sigma_A \geq \sigma_B$$

où $\varepsilon_A$ est la déformation au pic, et

$$\varepsilon_{el} = \varepsilon_B \cdot \frac{\sigma_A}{\sigma_B}$$

est la déformation qu'on aurait sous l'effort du pic en extrapolant élastiquement la déformation obtenue sous la contrainte de service.

**Tenue en flexion : Rf**

i) Flexion 4 points

Rf est la valeur obtenue en flexion 4 points (entre-axes : 70 x 210) sur éprouvettes prismatiques 70 x 70 x 280 mm montées sur appuis rotulés.

$$Rf = \frac{3F \, max(l-l')}{2dw^2}$$

où Fmax représente la force maximale en N (force au pic), l = 210 mm et $l' = \frac{1}{3}$ et d = w = 70 mm.

ii) Flexion 3 points

La valeur obtenue en flexion 3 points Rf (entre-axes : 200) est obtenue sur éprouvettes prismatiques 40 x 40 x 250 mm montées sur appuis rotulés.

$$Rf = \frac{3F \, max \, l}{2dw^2}$$

où Fmax représente la force maximale en N (force au pic), I = 200 mm, et d = w = 40 mm.

**Tenue en compression : Rc**

Rc est la valeur obtenue en compression directe sur échantillon cylindrique rectifié (diamètre 70 mm/ hauteur 140 mm).

$$Rc = \frac{4F}{\pi d^2}$$

où F représente la force à rupture en N, et d le diamètre des échantillons (70 mm).

**Ténacité : Kc, Gc**

La ténacité est exprimée soit en terme de contrainte (facteur d'intensité de contrainte critique: Kc) soit en terme d'énergie (taux critique d'énergie : Gc), en utilisant le formalisme de la Mécanique Linéaire de la Rupture.

Les essais sont réalisés en flexion 3 points, à partir de prismes entaillés 40 x 40 x 250 ou 70 x 70 x 280 mm, c'est-à-dire des échantillons de géométrie SENB (procédure ASTM - E 399-83). Une entaille à profil en V est réalisée à sec sur ces prismes, à l'aide d'une fraiseuse équipée d'un disque diamanté. La profondeur relative a/w de l'entaille est de 0,4 (a : profondeur de l'entaille, w : hauteur de l'échantillon).

Le facteur critique d'intensité de contrainte Kc est obtenu à partir de la charge de rupture F et de la longueur de la fissure a au point d'instabilité (essai en asservissement déplacement, à $10^{-2}$ mm/s, sur machine d'essai universelle SCHENCK) :

$$Kc = \frac{3Fl}{2dw^2}\sqrt{a}Y$$

où : l représente l'entre-axe entre points d'appui (banc de flexion) : = 210 mm,

d et w sont respectivement la profondeur et la hauteur de l'échantillon,

a est la longueur de l'entaille au moment de la rupture,

Y est un paramètre de forme qui dépend de la longueur de fissure ($\alpha$ = a/w). En flexion 3 points, on utilise de préférence le paramètre Y suivant SRAWLEY J.E (International J. of Fracture (1976), vol. 12, pp . 475-476)°:

$$Y = \frac{1,99 - \alpha(1-\alpha)(2,15 - 3,93\alpha + 2,7\alpha^2)}{(1+2\alpha)(1-\alpha)^{3/2}}$$

Gc peut être obtenu à partir des courbes force-déplacement, à condition d'extraire les contributions dues aux déformations parasites et de rapporter l'énergie dissipée à la section de ligament : (w - a ) x d.

En déformation plane, il existe une relation simple entre Kc et Gc :

$$Gc = \frac{Kc^2(1-v^2)}{E}$$

où: E est le module élastique

v représente le coefficient de Poisson.

E est obtenu expérimentalement par vibration d'un échantillon prismatique posé sur deux appuis, à partir de la détermination de la fréquence fondamentale (Méthode GRINDO-SONIC).

**Energie de fracturation : Wf**

Wf est la valeur obtenue par détermination de l'aire totale sous la courbe force-flèche, lors d'un essai de flexion 4 points sur prismes 70 x 70 x 280 mm. La flèche mesurée est corrigée afin de déterminer le déplacement vrai de l'échantillon.

$$Wf = \frac{\int F\delta c}{dw}$$

où F est la force appliquée, δc le déplacement vrai (flèche corrigée), d x w la section de l'échantillon.

## Adhérence

En ce qui concerne l'adhérence des fibres organiques dans la matrice cimentaire, la contrainte est déterminée par un essai d'extraction d'une monofibre encastrée dans un bloc de béton.

Les fils sont encastrés dans des blocs de béton de dimension 4 X 4 X 4cm. La composition utilisée est la même que celle utilisée pour les éprouvettes d'essai mécanique (flexion, compression, et traction); le ratio eau/ciment est fixé à 0,25.

Les fils encastrés sur une longueur de 10 mm sont extraits par traction à l'aide d'une machine d'essai universelle (SCHENCK), à une vitesse de 0,1 mm/min.

L'effort exercé est mesuré via un capteur de force adapté, et le déplacement du fil (par rapport à l'échantillon) via un capteur d'extensométrie.

La contrainte d'adhérence moyenne est estimée à partir de la formule simplifiée suivante:

$$\tau_d = \frac{Fmax}{\pi\phi l_e}$$

où Fmax est la force maximale mesurée, $\phi$ le diamètre du fil et $l_e$ la longueur d'encastrement.

## EXEMPLES

On a réalisé des bétons de fibres en utilisant les fibres définies dans les tableaux I à VI annexés, les compositions de ces bétons étant définies dans les tableaux II à VI annexés. Ces compositions sont exprimées en poids.

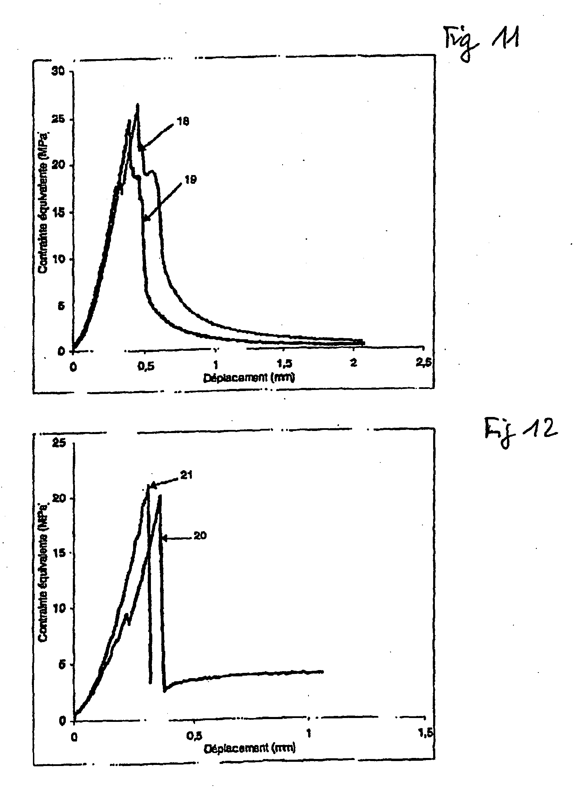

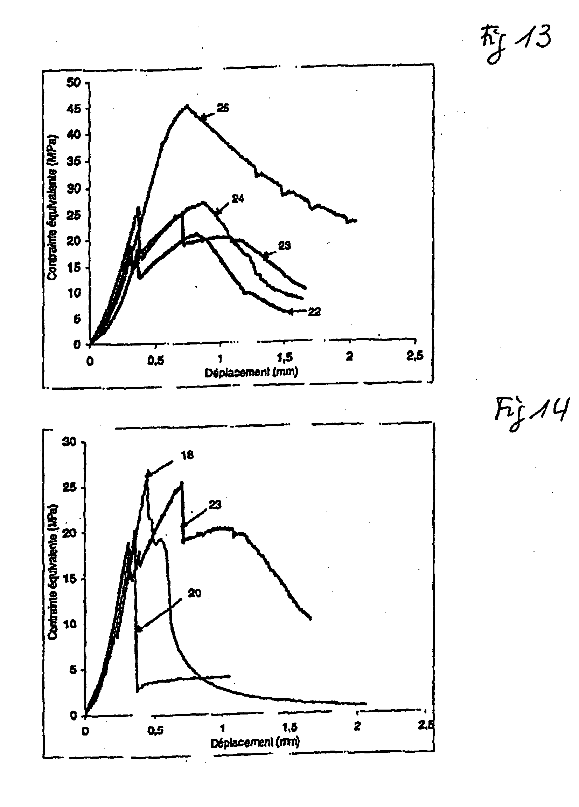

Les performances de ces bétons sont indiquées dans les Tableaux II à V annexés ainsi que sur les figures 2 à 14.

Sur ces figures :

La figure 2 est un graphique obtenu par des essais de flexion 4 points avec en ordonnée les valeurs de contrainte (MPa) et en abscisse les valeurs de la flèche (mm) pour des échantillons de béton, avec un rapport E/C = 0,2 et un mûrissement à 20°C (28 jours) : comparaison des fibres acier (Steel Cord) et des fibres organiques (APV).

La figure 3 est un graphique obtenu par des essais de flexion 4 points avec en ordonnée les valeurs de contrainte (MPa) et en abscisse les valeurs de la flèche (mm) pour des échantillons de béton, avec un rapport E/C = 0,2 et un traitement thermique à 90°C : comparaison des fibres acier (Steel Cord) et des fibres organiques (APV).

La figure 4 représente un graphique obtenu par des essais de traction directe avec en ordonnée les valeurs de contrainte (MPa) et en abscisse les valeurs de l'allongement (mm) pour des échantillons de béton, avec un rapport E/C = 0,2 et un mûrissement à 20°C (28 jours) : fibres organiques (APV).

La figure 5 représente un graphique obtenu par des essais de traction directe avec en ordonnée les valeurs de contrainte (MPa) et en abscisse les valeurs de l'allongement (mm) pour des échantillons de béton, avec un rapport E/C = 0,2 et un traitement thermique à 90°C : fibres organiques (APV).

La figure 6 représente un graphique obtenu par des essais de traction directe avec en ordonnée les valeurs de contrainte (MPa) et en abscisse les valeurs de l'allongement (mm) pour des échantillons de béton contenant de la wollastonite, avec un rapport E/C = 0,24 et un mûrissement à 20°C (28 jours) : fibres organiques (APV). Le critère de ductilité δ a varié de 3 à 5 environ.

La figure 7 est un graphique obtenu par des essais de flexion 3 points avec en ordonnée les valeurs de contrainte (MPa) et en abscisse les valeurs de la flèche (mm) pour des échantillons de béton, avec un rapport E/C = 0,25 et un traitement thermique à 90°C : fibres APV RF 1500.

La figure 8 est un graphique obtenu par des essais de flexion 3 points avec en ordonnée les valeurs de contrainte (MPa) et en abscisse les valeurs de la flèche (mm) pour des échantillons de béton, avec un rapport E/C = 0,25 et un traitement thermique à 90°C : fibres APV RF 1500 de différentes longueur (10 mm à 30 mm), et

La figure 9 est un graphique obtenu par des essais de flexion 3 points avec en ordonnée les valeurs de contrainte (MPa) et en abscisse les valeurs de la flèche (mm) pour des échantillons de béton, avec un rapport E/C = 0,25 et un traitement thermique à 90°C : fibres PEHD.

- la figure 10 est un graphique obtenu par des essais de flexion 3 points montrant l'effet d'un mélange de fibres organiques APV (2 % vol. de RF 1500 et 2 % vol. de RF 4000) dans une matrice béton avec un rapport E/C = 0,25 et un traitement thermique à 90°C pendant 48 heures.
- la figure 11 est un graphique représentant les courbes contrainte/déplacement obtenues en essais de flexion 3 points avec les compositions 18 et 19 avec fibres PEHD du tableau V.
- la figure 12 est un graphique analogue à celui de la figure 11 obtenu avec les compositions 20 et 21 avec fibres PA du tableau V.
- la figure 13 est un graphique similaire à celui des figures 11 et 12 obtenu avec les compositions 22, 23 et 24 avec fibres APV et 25 avec hybrides APV/acier du tableau V.
- la figure 14 est un graphique similaire à celui des figures 11 à 13, destiné à comparer les comportements de fibres de natures différentes suivant les compositions 18 (PEHD), 20 (PA) et 23 (APV) du tableau V.

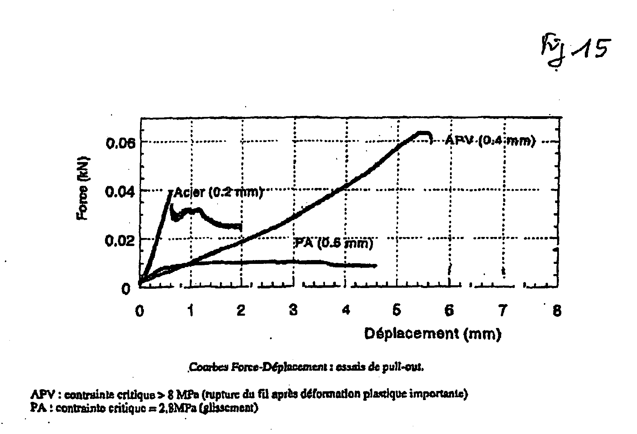

- la figure 15 est un graphique illustrant les résultats obtenus dans les essais d'arrachement monofibre avec diverses natures de fibres, avec en ordonnée la force appliquée et en abscisse le déplacement, avec la matrice de composition indiquée au tableau VI.

Les résultats obtenus en flexion 3 points dans les exemples 18 à 25 correspondent à des essais effectués avec un entre-axes de 120 mm sur éprouvettes prismatiques 40 x 40 x 160 mm.

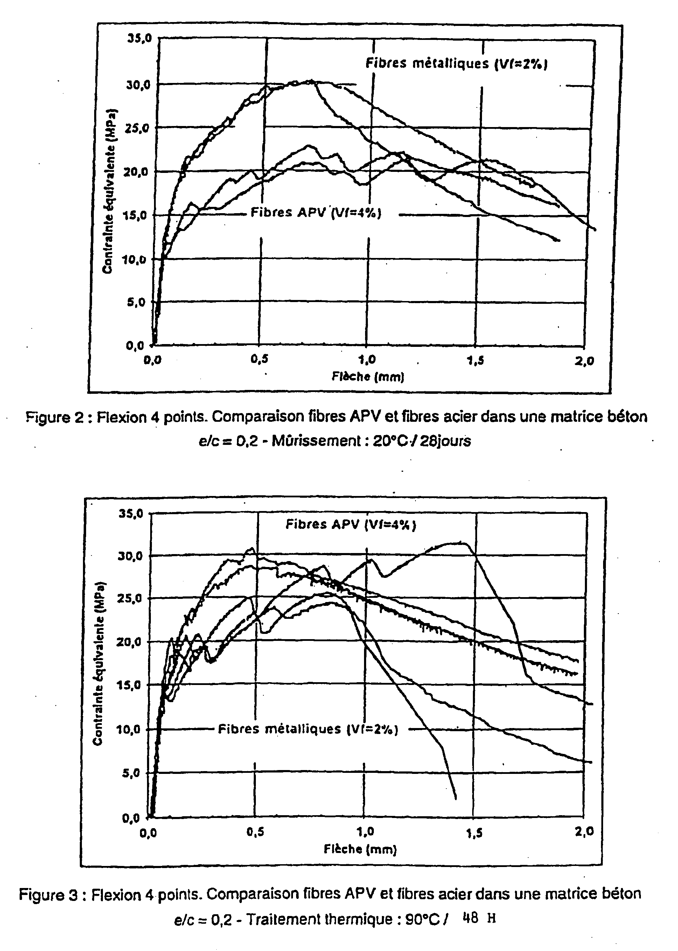

L'effet de renforcement apporté par des fibres dispersées dans une matrice béton est nettement mis en évidence au travers d'essais de flexion (4 points) : figures 2 et 3. Les fibres d'alcool polyvinylique (APV) incorporées à un taux de 4% vol. conduisent à un comportement similaire à celui obtenu avec une dispersion de fibres d'acier (2% vol.). Le traitement thermique (90°C) développe une certaine réactivité entre les fibres APV et la matrice béton : d'où une contrainte pic élevée observée en flexion (4 points).

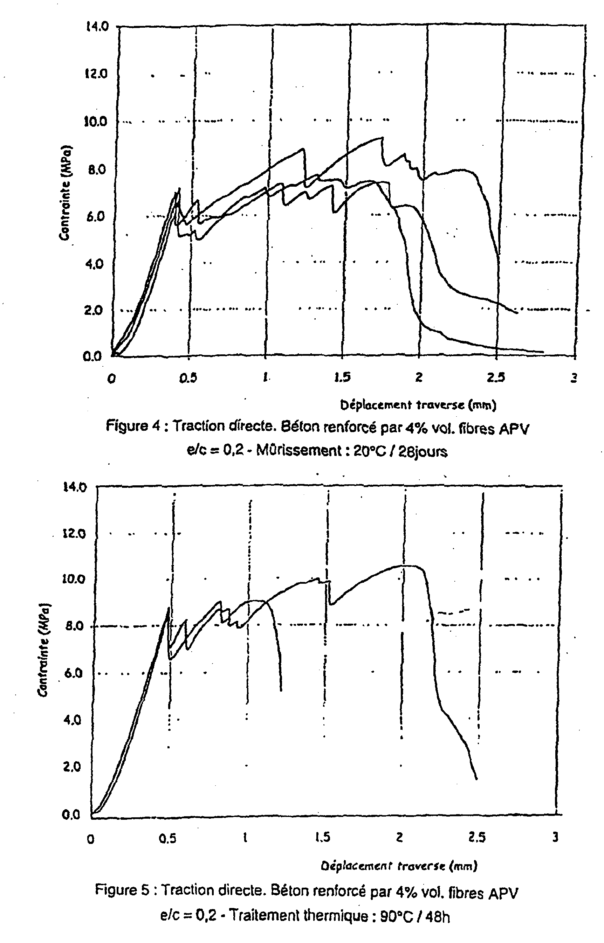

En traction directe (figures 4 et 5), on observe un effet d'écrouissage important (ductilité) en présence de 4% vol. de fibres d'alcool polyvinylique (APV) : une multifissuration importante est observée sur les éprouvettes de traction. Ce phénomène n'est pas observé dans le cas de fibres d'acier, en raison de la grande rigidité et de l'adhérence moyenne de ces fibres dans la matrice béton. La valeur au pic est sensiblement améliorée dans le cas de traitement thermique 90°C.

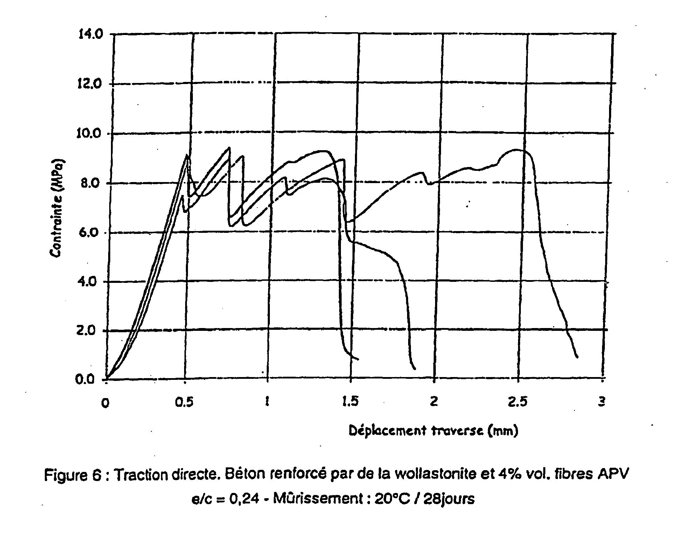

Des comportements similaires sont observés dans le cas de fibres APV dispersées dans une matrice contenant de la wollastonite (figure 6), avec accroissement de la contrainte de premier endommagement.

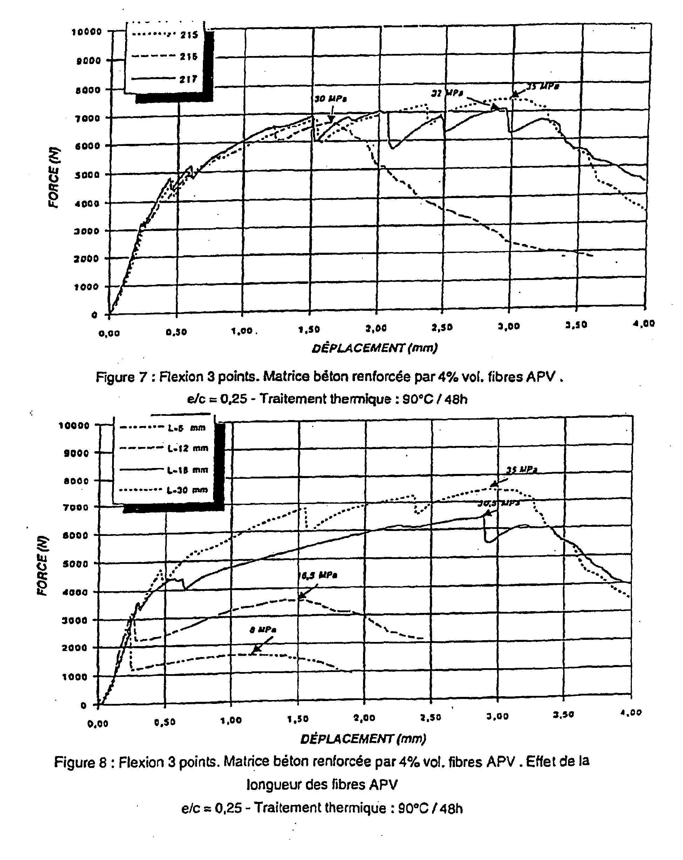

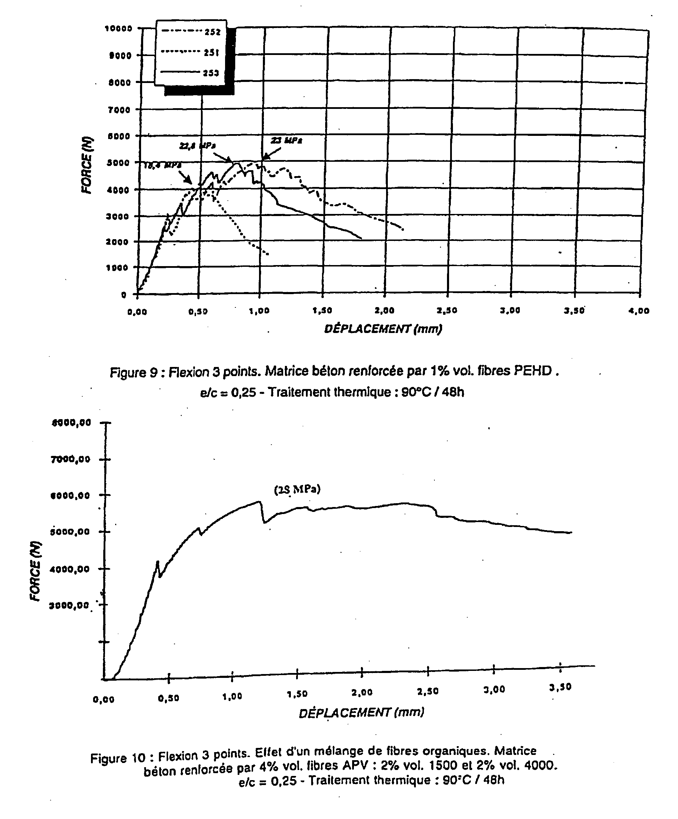

En présence de fibres organiques, les bétons testés en flexion 3 points présentent une forte ductilité : écrouissage important jusqu'à la contrainte pic, énergie dissipée post-pic. Ceci est observé aussi bien pour des fibres d'alcool polyvinylique APV (figure 7) que pour des fibres de polyéthylène haute densité PEHD (figure 9).

La longueur des fibres doit être optimisée : compromis entre la rhéologie et les propriétés mécaniques. Ainsi, pour des fibres APV de diamètre 400 microns env., il a été observé en flexion 3 points qu'il existe une transition en ce qui concerne la longueur des fibres vers 18 mm environ (figure 8). Ceci donne un facteur d'élancement de l'ordre de 50.

L'intérêt d'un mélange de fibres est illustré sur la figure 10. Ainsi, il a été observé que des fibres APV de dimensions moyennes (KURARAY 1500 : 4 % vol.) conduisent à un gain de la résistance en flexion (contrainte pic) du béton ; d'autre part, des fibres APV de plus grandes dimensions (KURARAY 4000: 4 % vol.) induisent une dissipation d'énergie importante en flexion (partie post-pic) au détriment par contre de la résistance (contrainte pic). Une association des deux types de fibres permet, de façon surprenante, d'obtenir un béton renforcé qui présente (par exemple en flexion) à la fois une amélioration de la résistance en flexion (contrainte pic) et de l'énergie dissipée (ductilité): (figure 10).

Des effets dans ce sens peuvent être développés par un renforcement hybride: association de fibres organiques et de fibres métalliques.

L'invention n'est pas limitée aux exemples de réalisation qui ont été décrits.

TABLEAU I

| Caractéristiques des fibres organiques étudiées | | | | | | | |
|---|---|---|---|---|---|---|---|
| | Densité | Module E (Gpa) | Résistance mécanique (MPa) | Allongement à rupture (%) | Diamètre ($\mu$m) | Longueur (mm) | Point fusion (°C) |
| APV | 1,3 | 20-30 | 800-1200 | 7-10 | | | 220 |
| RM182 | | | | | 15 | 6 | |
| RF350 | | | | | 200 | 12 | |
| RF1500 | | | | | 400 | 20/30 | |

(suite)

| Caractéristiques des fibres organiques étudiées | | | | | | | |
|---|---|---|---|---|---|---|---|
| | Densité | Module E (Gpa) | Résistance mécanique (MPa) | Allongement à rupture (%) | Diamètre (μm) | Longueur (mm) | Point fusion (°C) |
| RF4000 | | | | | 600 | 30 | |
| PEHD | 0,97 | 90 | 2700 | 3-5 | 50  50  50 | 5 10 18 | 150 |
| PA | 1,12 | 2-5 | 500-900 | 20-30 | 500  500 | 20 30 | 260 |
| | | | | | | | |
| Acier | 7,6 | 210 | 2900 | | 200 | 13 | 1550 |

TABLEAU II

| Evaluation des performances mécaniques de bétons fibrés : comparaison fibres APV/fibres acier | | | | | | | | |
|---|---|---|---|---|---|---|---|---|
| Exemple n° | 1 | 2 | 3 | 4 | 5 | 6 | 7 | 8 |
| Ciment Portland | 1 | 1 | 1 | 1 | 1 | 1 | 1 | 1 |
| Sable | 1,430 | 1,430 | 1,430 | 1,430 | 1,430 | 1,430 | 1,29 | 1,29 |
| Farine de quartz | 0,300 | 0,300 | 0,300 | 0,300 | 0,300 | 0,300 | 0,300 | 0,300 |
| Fumée de silice | 0,325 | 0,325 | 0,325 | 0,325 | 0,325 | 0,325 | 0,325 | 0,325 |
| Adjuvant (extrait sec) | 0,012 | 0,012 | 0,012 | 0,012 | 0,012 | 0,012 | 0,015 | 0,015 |
| Eau | 0,200 | 0,200 | 0,24 | 0,24 | 0,20 | 0,20 | 0,24 | 0,24 |
| Fibres : type<br>Fibres : % vol | Sans | Sans | Acier 2% | Acier 2% | APV 4% | APV 4% | APV 4% | APV 4% |
| wollastonite | 0 | 0 | 0 | 0 | 0 | 0 | 10 | 10 |
| Mica | 0 | 0 | 0 | 0 | 0 | 0 | 0 | 0 |
| Mûrissement ou traitement thermique (T °C) | 20 | 90 | 20 | 90 | 20 | 90 | 20 | 90 |
| Résistance à la flexion 4 points | 16,6 | 16,5 | 18,5 | 21,3 | 23 | 27,5 | 22 | 27 |
| Résistance à la traction (MPa) | 7,1 | 6,75 | 7,75 | 10,75 | 9 | 8,5 | 9,25 | 9,45 |
| Ténacité Gc (J/m$^2$) | 9,2 | 10 | 10 | 10,5 | 9,75 | 10,25 | 20 | 22 |
| Résistance à la compression | 190 | 198 | 155 | 182,5 | 138 | 147,5 | 143 | 147 |
| Energie dissipée Wf (J/m$^2$) | 12 | 15 | >5000 | >5000 | >5000 | >5000 | >5000 | >5000 |
| Type fibre : APV = alcool polyvinylique | | | | | | | | |

TABLEAU III

| Evaluation des performances mécaniques obtenues avec différentes fibres organiques | | | | | |
|---|---|---|---|---|---|
| Exemple n° | 9 | 10 | 11 | 12 | 13 |
| Ciment Portland | 1 | 1 | 1 | 1 | 1 |
| Sable | 1,430 | 1,430 | 1,430 | 1,430 | 1,430 |

(suite)

| Evaluation des performances mécaniques obtenues avec différentes fibres organiques | | | | | |
|---|---|---|---|---|---|
| Exemple n° | 9 | 10 | 11 | 12 | 13 |
| Farine de quartz | 0,300 | 0,300 | 0,300 | 0,300 | 0,300 |
| Fumée de silice | 0,325 | 0,325 | 0,325 | 0,325 | 0,325 |
| Adjuvant (extrait sec) | 0,01 | 0,01 | 0,01 | 0,01 | 0,01 |
| Eau | 0,25 | 0,25 | 0,25 | 0,25 | 0,25 |
| Fibres: type<br>Fibres: % vol | APV 1500<br>4 | APV 4000<br>4 | APV 1800<br>4 | PEHD<br>1 | PAN<br>1,5 |
| Mûrissement ou traitement thermique (T°C) | 90 | 90 | 90 | 90 | 90 |
| Résistance à la flexion 3 points (MPa) | 35 | 27 | 25 | 22,5 | 20 |
| Ténacité Gc (J/m$^2$) | 10 | 10 | 11,25 | 11 | 10 |
| Résistance à la compression (MPa) | 142 | 145 | | 152,5 | 145 |
| Type fibre APV = Alcool Polyvinylique KURARAY (1500, 4000), UNITIKA (1800).<br>PEHD = Polyéthylène Haute Densité<br>PAN = Polyacrylonitrile | | | | | |

Tableau IV

| Fibres APV (1500) : effet de la longueur des fibres | | | | |
|---|---|---|---|---|
| Exemple n° | 14 | 15 | 16 | 17 |
| Ciment Portland | 1 | 1 | 1 | 1 |
| Sable | 1,430 | 1,430 | 1,430 | 1,430 |
| Farine de quartz | 0,300 | 0,300 | 0,300 | 0,300 |
| Fumée de silice | 0,325 | 0,325 | 0,325 | 0,325 |
| Adjuvant (extrait sec) | 0,01 | 0,01 | 0,01 | 0,01 |
| Eau | 0,25 | 0,25 | 0,25 | 0,25 |
| Fibres : longueur (mm)<br>Fibres : % vol. | 30<br>4 | 18<br>4 | 12<br>4 | 6<br>4 |
| Mûrissement ou traitement thermique (T °C) | 90 | 90 | 90 | 90 |
| Résistance à la flexion 3 points (MPa) | 35 | 30 | 16,5 | 12 |
| Résistance à la compression (MPa) | 145 | 152 | 132,5 | 135 |
| Type de rupture | Ductile | Ductile | Pas d'écrouissage | Semi-fragile |

TABLEAU V

| Exemple N° | 18 | 19 | 20 | 21 | 22 | 23 | 24 | 25 |
|---|---|---|---|---|---|---|---|---|
| Ciment Portland | 1 | 1 | 1 | 1 | 1 | 1 | 1 | 1 |
| Fumée de silice | 0,325 | 0,325 | 0,325 | 0,325 | 0,325 | 0,325 | 0,325 | 0,325 |
| Farine de quartz | 0,3 | 0,3 | 0,3 | 0,3 | 0,3 | 0,3 | 0,3 | 0,3 |
| Sable | 1,43 | 1,43 | 1,43 | 1,43 | 1,43 | 1,43 | 1,2 | 1,43 |
| wollastonite | - | - | - | - | - | - | 0,24 | - |

(suite)

| Exemple N° | 18 | 19 | 20 | 21 | 22 | 23 | 24 | 25 | |
|---|---|---|---|---|---|---|---|---|---|
| Adjuvant (extrait sec) | 0,018 | 0,018 | 0,018 | 0,018 | 0,019 | 0,017 | 0,018 | 0,018 | |
| Eau (E/C) | 0,25 | 0,25 | 0,22 | 0,22 | 0,19 | 0,21 | 0,21 | 0,25 | |
| Fibres: nature | PEHD | PEHD | PA | PA | APV | APV | APV | APV | Acier |
| Fibres: longueur (mm) | 5 | 10 | 20 | 30 | 12 | 20 | 20 | 6 | 13 |
| Fibres: diamètre (mm) | 0,05 | 0,05 | 0,5 | 0,5 | 0,2 | 0,4 | 0,4 | 0,015 | 0,2 |
| Fibres: % vol. | 1,5 | 1 | 5    5 4 | | | 4 | 4 | 1 | 2 |
| Traitement thermique (T°C) | 90 | 90 | 90 | 90 | 90 | 90 | 90 | 90 | |
| Résistance à la flexion 3 points 40x40x160 mm | 26,5 | 24,6 | 20,4 | 21,3 | 20,5 | 24,9 | 27,9 | 44,0 | |
| Résistance à la compression MPa | 121 | 185 | 122 | 139 | 150 | 137 | 140 | 178 | |

TABLEAU VI

| Composition de la matrice utilisée pour les essais d'arrachement (pull-out) | |
|---|---|
| Ciment Portland | 1 |
| Sable | 1,43 |
| Farine de quartz | 0,3 |
| Fumée de silice | 0,325 |
| Adjuvant (extrait sec) | 0,018 |
| E/C | 0,25 |
| Mûrissement ou traitement thermique (T°C) | 90 |

## Revendications

1. Béton se composant d'une matrice cimentaire durcie dans laquelle sont dispersées des fibres organiques, obtenu par mélange avec de l'eau d'une composition comprenant, outre les fibres :

    (a) du ciment
    (b) des éléments granulaires;
    (c) des éléments fins à réaction pouzzolanique;
    (d) au moins un agent dispersant;

    et **caractérisé en ce que**:

    (1) les éléments granulaires (b) sont présents à raison de 20 à 60% en poids de matrice cimentaire et ont une grosseur de grain maximale D d'au plus 2 mm, de préférence d'au plus 1 mm;
    (2) les éléments fins à réaction pouzzolanique (c) ont une taille de particule élémentaire d'au plus 20 $\mu$m, de préférence d'au plus 1 $\mu$m ;
    (3) le pourcentage en poids de l'eau par rapport au poids cumulé du ciment (a) et des éléments (c) est compris entre 8 et 25%
    (4) les fibres organiques sont des fibres d'alcool polyvinylique, des fibres de polyacrylonitrile, des fibres de polyéthylène, des fibres de polyéthylène haute densité des fibres de polyamide ou de polyimide, des fibres de polypropylène (homo ou copo), ou encore des mélanges de ces fibres et présentent une longueur individuelle $\ell$ d'au moins 2 mm et un rapport $\ell/\Phi$, $\Phi$ étant le diamètre des fibres, d'au moins 20;
    (5) la quantité de fibres est telle que leur volume représente de 1% à au plus 8 % du volume du béton après la prise;

(6) le rapport R entre la longueur moyenne L des fibres et la grosseur de grain maximale D des éléments granulaires est d'au moins 5.

2. Béton constitué d'une matrice cimentaire durcie dans laquelle sont dispersées des fibres organiques, provenant du mélange avec de l'eau d'une composition comprenant, outre les fibres:

(a) du ciment;
(b) des éléments granulaires, présents à raison de 20 à 60% en poids de la matrice cimentaire;
(c) des éléments fins à réaction pouzzolanique;
(d) au moins un agent dispersant;

et **caractérisé en ce que**:

(1) les éléments à réaction pouzzolanique ont une taille de particules élémentaires d'au plus 1 $\mu$m, de préférence d'au plus 0,5 $\mu$m ;
(2) le pourcentage en poids de l'eau par rapport au poids cumulé du ciment (a) et des éléments (c) est compris antre 8 et 24%;
(3) les fibres organiques sont de fibres d'alcool polyvinylique, des fibres de polyacrylonitrile, des fibres de polyéthylène, des fibres de polyéthylène haute densité des fibres de polyamide ou de polyimide, des fibres de polypropylène (homo ou copo), ou encore des mélanges de ces fibres et présentent une longueur individuelle $\ell$ d'au moins 2 mm et un rapport $\ell/\Phi$, $\Phi$ étant le diamètre des fibres, d'au moins 20;
(4) la quantité de fibres est telle que leur volume représente de 1% à au plus 8 % du volume du béton après la prise;
(5) l'ensemble des constituants (a), (b) et (c) présente une taille de grain D75 d'au plus 2 mm, de préférence, d'au plus 1 mm, et une taille de grain D50 d'au plus 150 $\mu$m, de préférence d'au plus 100 $\mu$m; et
(6) le rapport R entre la longueur moyenne L des fibres et la taille de grain D75 de l'ensemble des constituants (a), (b) et (c) est d'au moins 5, de préférence d'au moins 10.

3. Béton selon l'une des revendications 1 ou 2, **caractérisé en ce qu'**il présente en traction directe une ductilité, exprimée en termes de coefficient de ductilité $\delta$, de $\delta > 1$ , de préférence $\delta > 1,25$.

4. Béton selon les revendications 1 à 3, **caractérisé en ce que** le rapport I/$\phi$ des fibres est d'au plus 500.

5. Béton selon les revendications 1 à 4, **caractérisé en ce que** la contrainte d'adhérence moyenne des fibres dans la matrice cimentaire durcie est d'au moins 2 MPa, de préférence d'au moins 5 MPa.

6. Béton selon l'une des revendications 1 à 5, **caractérisé en ce que** la matrice cimentaire contient complémentairement au moins un des composés suivants, ayant pour fonction d'augmenter l'adhérence des fibres dans la matrice: les composés de la silice comprenant majoritairement de la silice, le carbonate de calcium précipité, l'alcool polyvinylique en solution aqueuse, des phosphates, des latex, un démoussant, ou un mélange desdits composés.

7. Béton selon la revendication 6, **caractérisé en ce que** le composé de la silice est de la silice de précipitation introduite dans une teneur comprise entre 0,1 et 5 % en poids, exprimé en sec, par rapport au poids total du béton.

8. Béton selon la revendication 7, **caractérisé en ce que** la silice de précipitation est introduite dans la composition sous forme d'une suspension aqueuse.

9. Béton selon l'une quelconque des revendications précédentes, **caractérisé en ce qu'**une partie des fibres organiques est substituée par des fibres métalliques, les fibres métalliques ayant de préférence une longueur individuelle d'au moins 2 mm et un rapport d'élancement I/$\phi$ ($\phi$ étant le diamètre des fibres) d'au moins 20.

10. Béton selon l'une quelconque des revendications précédentes, **caractérisé en ce qu'**il comprend une association de fibres courtes et longues organiques et/ou métalliques.

11. Béton selon l'une quelconque des revendications 1 à 10 **caractérisé en ce qu'**il comprend des constituants capables d'améliorer la ténacité de la matrice choisis parmi des éléments aciculaires ou plaquettaires ayant une taille moyenne d'au plus 1 mm, et présents dans une proportion volumique comprise entre 2,5 et 35% du volume cumulé des éléments granulaires (b) et des éléments à réaction pouzzolanique (c).

**12.** Béton selon la revendication 11, **caractérisé en ce que** la ténacité de la matrice cimentaire est d'au moins 15 J/m$^2$.

**13.** Béton selon l'une quelconque des revendications précédentes, **caractérisé en ce que** la ténacité de la matrice est obtenue par ajout à la composition cimentaire de renforts de forme anisotrope et de taille moyenne d'au plus 500 μm.

**14.** Béton selon la revendication précédente, **caractérisé en ce que** les renforts sont présents dans une proportion volumique comprise entre 5% et 25% du volume cumulé des éléments granulaires (b) et des éléments à réaction pouzzolanique (c).

**15.** Béton selon l'une quelconque des revendications 11 à 14, **caractérisé en ce que** les renforts de forme aciculaire sont choisis parmi les fibres de wollastonite, les fibres de bauxite, les fibres de mullite, les fibres de titanate de potassium, les fibres de carbure de silicium, les fibres de cellulose ou dérivés, les fibres de carbone, les fibres de phosphate de calcium, notamment d'hydroxyapatite HAP, les fibres de carbonate de calcium, les fibres de verre (alcali-résistantes) ou les produits dérivés obtenus par broyage desdites fibres et les mélanges desdites fibres, des fibres courtes (longueur d'au plus 2 mm, de préférence d'au plus 1 mm) d'alcool polyvinylique, de polyacrylonitrile, de polyéthylène haute densité, de polyamide, d'aramide ou de polypropylène pouvant également être présentes, ainsi que des matériaux, tels que la laine d'acier.

**16.** Béton selon l'une quelconque des revendications 11 à 14, **caractérisé en ce que** les plaquettes sont choisies parmi les plaquettes de mica, les plaquettes de talc, les plaquettes de silicates mixtes (argiles), les plaquettes de vermiculite, les plaquettes d'alumine et aluminates et les mélanges desdites plaquettes.

**17.** Béton selon l'une quelconque des revendications 13 à 16 **caractérisé en ce qu'**au moins une partie des renforts de forme anisotrope présente en surface un revêtement organique polymérique obtenu à partir d'au moins un des composés suivants: alcool polyvinylique, silanes, siliconates, résines siloxanes, polyorganosiloxanes ou le produit de la réaction entre (i) au moins un acide carboxylique contenant 3 à 22 atomes de carbone, (ii) au moins une amine aromatique ou aliphatique polyfonctionnelle ou amine substituée, contenant de 2 à 25 atomes de carbone, et (iii) un agent de réticulation qui est un complexe de métal hydrosoluble, contenant au moins un métal choisi parmi: le zinc, l'aluminium, le titane, le cuivre, le chrome, le fer, le zirconium et le plomb.

**18.** Béton selon l'une quelconque des revendications précédentes, **caractérisé en ce que** la grosseur des éléments granulaires (b) est d'au plus 500 μm.

**19.** Béton selon l'une quelconque des revendications précédentes, **caractérisé en ce que** les éléments granulaires (b) sont des sables fins ou des mélanges de sables fins, tamisés ou broyés, pouvant avantageusement comprendre des sables siliceux, en particulier de la farine de quartz.

**20.** Béton selon l'une quelconque des revendications précédentes **caractérisé en ce que** lesdits éléments granulaires (b) sont présents à raison de 25 à 50% en poids de la matrice cimentaire.

**21.** Béton selon l'une quelconque des revendications précédentes, **caractérisé en ce que** les éléments fins à réaction pouzzolanique (c) comprennent des éléments du groupe constitué par la silice, notamment la fumée de silice, les cendres volantes et les laitiers de hauts-fourneaux.

**22.** Béton selon l'une quelconque des revendications précédentes, **caractérisé en ce que** le pourcentage d'eau par rapport au poids cumulé de aiment (a) et des éléments à réaction pouzzolanique (c) est compris entre 13 et 25%.

**23.** Béton selon l'une quelconque des revendications précédentes, caractérisé en qu'il présente une résistance en traction directe d'au moins 6 MPa.

**24.** Béton selon l'une quelconque des revendications précédentes, caractérisé en qu'il présente une résistance en flexion 4 points d'au moins 20 MPa.

**25.** Béton selon l'une quelconque des revendications précédentes, caractérisé en qu'il présente une résistance à la compression d'au moins 120 MPa, et de préférence 140 MPa.

**26.** Béton selon l'une quelconque des revendications précédentes, caractérisé en qu'il présente une énergie de rupture d'au moins 2000 J/m$^2$.

**27.** Béton selon l'une quelconque des revendications 1 à 26, **caractérisé en ce qu'**il est soumis, après prise, à une maturation à une température voisine de la température ambiante, par exemple à 20°C, pendant la durée nécessaire à l'obtention des caractéristiques mécaniques désirées.

**28.** Béton selon l'une quelconque des revendications 1 à 27, **caractérisé en ce qu'**il est soumis, après prise, à un traitement thermique entre 60°C et 100°C à pression normale.

**29.** Béton selon la revendication 28, **caractérisé en ce que** la durée du traitement thermique est de 6 heures à 4 jours, en général de 6h à 72h.

**30.** Béton selon l'une quelconque des revendications 1 à 29 **caractérisé en ce qu'**il est précontraint en pré-tension.

**31.** Béton selon l'une quelconque des revendications 1 à 29, **caractérisé en ce qu'**il est précontraint en post-tension.

**Claims**

**1.** Concrete made of a hardened cement matrix in which organic fibres are dispersed, derived from blending with water a composition containing besides organic fibres:

(a) cement,
(b) granular elements,
(c) fine elements having a pouzzolanic reaction,
(d) at least one dispersing agent, and

**characterized in that**:

(1) the granular elements (b) are present in a proportion of 30 to 60% w/w cement matrix and have a maximum D grain size of 2 mm at the most, preferably 1 mm at the most,
(2) the fine elements with a pouzzolanic reaction have an elementary particle size of 20 $\mu$m at the most, preferably 1 $\mu$m at the most.
(3) the weight percentage of water to the added weight of the cement (a) and elements (c) is in the range between 8% and 25%.
(4) the organic fibres are polyvinyl alcohol fibres, polyacrylonitrile fibers, polyethylene fibres, high density polyethylene, polyamide or polyimde fibers, polypropylene fibres (homo- or copolymer) or mixtures of said fibers and present an individual length $\ell$ of at least 2 mm and a $\ell/\Phi$ ratio of at least 20, $\Phi$ being the fibre diameter.,
(5) the fibre quantity is such that their volume represents 1% to 8% at the most of the concrete volume after setting, et
(6) the ratio R between the average fibre length L and the maximum D grain size of the granular elements is at least 5.

**2.** Concrete comprising a hardened cement matrix in which organic fibres are dispersed, obtained by blending with water a composition containing besides fibres:

(a) cement,
(b) granular elements, present in a proportion of 30 to 60% w/w cement matrix
(c) fine elements with a pouzzolanic reaction,
(d) at least one dispersing agent, and

**characterized in that**:

(1) the fine elements with a pouzzolanic reaction have an elementary particle size of 1 $\mu$m at the most, preferably 0.5 $\mu$m at the most,
(2) the weight percentage of water to the added weight of cement (a) and elements (c) is in the range between 8% and 24%,
(3) the organic fibres are polyvinyl alcohol fibres, polyacrylonitrile fibers, polyethylene fibres, high density polyethylene, polyamide or polyimide fibers, polypropylene fibres (homo- or copolymer) or mixtures of said fibers and present an individual length $\ell$ or at least 2 mm and a $\ell/\Phi$ ratio of at least 20, $\Phi$ being the fibre diameter,

(4) the fibre amount is such that their volume represents from 1% to 8% at the most of the concrete after setting,

(5) the whole elements (a), (b) and (c) have a grain size 075 of 2 mm at the most, preferably 1 mm at the most, and a grain size D50 of 150 $\mu$m at the most, preferably 100 $\mu$m at the most, and

(6) the ratio R between the average fibre length L and the grain size D75 of all elements (a), (b) and (c) is at least 5, preferably at least 10.

3. Concrete according to any one of claims 1 or 2, **characterized in that** it has, in direct tensile stress, a ductility, given in terms of ductility coefficient $\delta$, $\delta > 1$, preferably $\delta > 1.25$.

4. Concrete according to any one of claims 1 to 3, **characterized in that** the $\ell/\Phi$ ratio of the fibres is at the most 500.

5. Concrete according to any one of claims 1 to 4, **characterized in that** the average adherence stress of the fibres in the hardened cement matrix is at least 2 MPa, preferably at least 5 MPa.

6. Concrete according to any one of claims 1 to 5, **characterized in that** the cement matrix additionally contains at least one of the following compounds, the function of which is to increase the fibre adherence in the matrix: silica compounds essentially comprising silica, precipitated calcium carbonate, polyvinyl alcohol in aqueous solution, phosphates, latexes, a defoaming agent or a blend of said compounds.

7. Concrete according to claim 6, **characterized in that** the silica compound is precipitation silica introduced in a content ranging from 0.1% to 5% by weight, based in dry conditions, with respect to the total concrete weight.

8. Concrete according to claim 7, **characterized in that** the precipitation silica is introduced into the composition as an aqueous suspension.

9. Concrete according to any one of the preceding claims, **characterized in that** a portion of the organic fibres is substituted for by metal fibres, metal fibres preferably having an individual length of at least 2 mm and a $\ell/\Phi$ elongation ratio ($\Phi$ being the fibre diameter) of at least 20.

10. Concrete according to any one of the preceding claims, **characterized in that** it comprises an association of short and long organic and/or metal fibres.

11. Concrete according to any one of claims 1 to 10, **characterized in that** it comprises elements able to improve the matrix tenacity, which are selected amongst needle- or platelet-shaped elements, the average size thereof being 1 mm at the most and being provided in a volume proportion between 2.5% and 35% of the added volume of the granular elements (b) and the pouzzolanic reaction elements (c).

12. Concrete according to claim 11, **characterized in that** the cement matrix tenacity is of at least 15 J/m$^2$.

13. Concrete according to any one of the preceding claims, **characterized in that** the matrix tenacity is obtained through addition to the cement composition of reinforcing agents with an anisotropic shape and an average size of 500 /$\mu$m at the most.

14. Concrete according to the preceding claim, **characterized in that** the reinforcing agents are provided in a volume proportion ranging from 5% to 25% of the added volume of the granular elements (b) and the pouzzolanic reaction elements (c).

15. Concrete according to any one of claims 11 to 14, **characterized in that** the needle-shaped reinforcing agents are selected amongst wollastonite fibres, bauxite fibres, mullite fibres, potassium titanate fibres, silicon carbide fibres, cellulose fibres or their derivates, carbon fibres, calcium phosphate fibres, more particularly hydroxyapatite HAP, calcium carbonate fibres, (alkali-resistant) glass fibres or derivates obtained through crushing said fibres and blends of sa id fibres, polyvinyl alcohol fibres, polyacrylonitrile, high density polyethylene, polyamide, aramid or polypropylene short fibres (length of at the most 2 mm, preferably of at the most 1 mm) being liable to be present, as well as materials such as steel wool.

16. Concrete according to any one of claims 11 to 14 **characterized in that** the platelets are selected amongst mica platelets, talc platelets, composite silicate platelets (clays), vermiculite platelets, alumina and aluminates platelets and blends of said platelets.

17. Concrete according to any one of claims 13 to 16, **characterized in that** at least a portion of the anisotropic reinforcing agents have on the surface a polymer organic coating obtained from at least one of the following compounds: polyvinyl alcohol, silanes, siliconates, siloxane resins, polyorganosiloxanes or the reaction product between (i) at least one carboxylic acid containing 3 to 22 carbon atoms, (ii) at least one polyfunctional aromatic or aliphatic amine or a substituted amine, containing 2 to 25 carbon atoms and (iii) a cross-linking agent which is a hydrosoluble metal complex, containing at least a metal selected amongst zinc, aluminium, titanium, copper, chromium, iron, zirconium and lead.

18. Concrete according to any one of the preceding claims, **characterized in that** the granular element size (b) is at the most 500 $\mu$m.

19. Concrete according to any of the preceding claims, **characterized in that** the granular elements (b) are fine sands or blends of fine sands, sieved or crushed, liable to advantageously contain silica sands, more particularly, quartz flour.

20. Concrete according to any of the preceding claims, **characterized in that** said granular elements (b) are provided in the range of 25% to 50% by weight of the cement matrix.

21. Concrete according to any one of the preceding claims, **characterized in that** the pouzzolanic reaction fine elements (c) comprise elements of the group comprising silica, more particularly silica smoke, flying ashes and blast furnace slags.

22. Concrete according to any one of the preceding claims, **characterized in that** the water percentage based one the added weight of cement (a) and pouzzolanic reaction elements (c) is in the range between 13% and 25%.

23. Concrete according to any of the preceding claims, **characterized in that** it has a direct tensile strength of at least 6 MPa.

24. Concrete according to any of the preceding claims, **characterized in that** it has a 4 point bending resistance of at least 20 MPa.

25. Concrete according to any one of the preceding claims, **characterized in that** it has a compression resistance of at least 120 MPa, and preferably 140 MPa.

26. Concrete according to any one of the preceding claims, **characterized in that** it has a breaking energy of at least 2000 J/m$^2$.

27. Concrete according to any one of claims 1 to 26, **characterized in that** it is provided, after setting, a maturing at a temperature close to ambient temperature, for example, at 20°C, for a period of time required to obtain the desired mechanical features.

28. Concrete according to any one of claims 1 to 27, **characterized in that** it is provided, after setting, a thermal treatment between 60°C and 100°C at a normal pressure.

29. Concrete according to claim 28, **characterized in that** the duration of the thermal treatment is from 6 hours to 4 days, generally from 6 hours to 72 hours.

30. Concrete according to any one of claims 1 to 29, **characterized in that** it is pre-stressed in pre-tension.

31. Concrete according to any one of claims 1 to 29, **characterized in that** it is pre-stressed in post-tension.

**Patentansprüche**

1. Beton, der aus einer gehärteten Zementmatrix, in der organische Fasern dispergiert sind, besteht und durch Mischen einer Zusammensetzung, die außer den Fasern folgendes enthalt, mit Wasser gewonnen wird:

  (a) Zement;

(b) körnige Elemente;

(c) feine puzzolanisch reagierende Elemente;

(d) wenigstens ein Dispergiermittel;

**dadurch gekennzeichnet, dass**

(1) die körnigen Elemente (b) die 20% bis 60 Gew.-% der Zementmatrix bilden und haben eine maximale Korngröße D von höchstens 2 mm, vorzugsweise höchstens 1 mm;

(2) die feinen puzzolanisch reagierenden Elemente (c) eine Elementarteilchengröße von höchstens 20 $\mu$m, vorzugsweise höchstens 1 $\mu$m, haben;

(3) der Gewichtsprozentwert des Wassers in Bezug auf die Summe der Gewichte des Zements (a) und der Elemente (c) zwischen 8 und 25% liegt;

(4) die organischen Fasern, Polyvinylalkoholfasern, Polyacrylonitrilfasern, Polyethylenfasern, hoher Dichte-Polyethylenfaser, Polyamidfasern oder Polyimidfasern, Polypropylenfasern (Homo- oder Copolymer)oder aber auch Gemische dieser Fasern sind, die eine individuelle Lange $\ell$ von wenigstens 2mm und ein Verhältnis $\ell/\Phi$, wobei $\Phi$ der Durchmesser der Fasern ist, von wenigstens 20 haben, ,

(5) die Menge der Fasern so groß ist, dass ihr Volumen 1% bis höchstens 8% des Volumens des Betons nach dem Abbinden darstellt;

(6) das Verhaltnis R zwischen der mittleren Lange L der Fasern und der maximalen Korngröße D der körnigen Elemente wenigstens 5 beträgt.

2. Beton, der aus einer gehärteten Zementmatrix, in der organische Fasern dispergiert sind, besteht und durch Mischen einer Zusammensetzung, die außer den Fasern folgendes enthalt, mit Wasser gewonnen wird:

(a) Zement;

(b) körnige Elemente die 20% bis 60 Gew.-% der Zementmatrix bilden,

(c) feine puzzolanisch reagierende Elemente;

(d) wenigstens ein Dispergiermittel;

**dadurch gekennzeichnet, dass**

(1) die feinen puzzolanisch reagierenden Elemente eine Elementarteilchengröße von höchstens 1 $\mu$m oder höchstens 0,5 $\mu$m, haben;

(2) der Gewichtsprozentwert des Wassers in bezug auf die Gewichte des Zements (a) und der Elemente (c) zwischen 8 und 24% liegt;

(3) die organischen Fasern, Polyvinylalkoholfasern, Polyacrylonitrilfasern, Polyethylenfasern, hoher Dichte-Polyethylenfaser, Polyamidfasern oder Polyimidfasern, Polypropylenfasern (Homo- oder Copolymer) oder aber auch Gemische dieser Fasern sind, die eine individuelle Lange $\ell$ von wenigstens 2mm und ein Verhältnis $\ell/\Phi$, wobei $\Phi$ der Durchmesser der Fasern ist, von wenigstens 20 haben

(4) die Menge der Fasern so groß ist, dass ihr Volumen 1% bis höchstens 8% des Volumens des Betons nach dem Abbinden darstellt;

(5) die Gesamtmenge der Bestandteile (a), (b) und (c) eine Korngröße D75 von hochstens 2 mm, vorzugsweise höchstens 1 mm, und eine Korngröße D50 von höchstens 150 $\mu$m, vorzugsweise höchstens 100 $\mu$m, hat; und

(6) das Verhältnis R zwischen der mittleren Lange L der Fasern und der Korngröße D75 der Gesamtmenge der Bestandteile (a), (b) und (c) wenigstens 5, vorzugsweise 10, beträgt.

3. Beton gemäß einem der Ansprüche 1 und 2, **dadurch gekennzeichnet, dass** er im Direktzugtest eine als Duktilitätskoeffizient $\delta$ ausgedrückte Duktilität von $\delta > 1$, vorzugsweise $\delta > 1{,}25$, aufweist.

4. Beton gemäß den Ansprüchen 1 bis 3, **dadurch gekennzeichnet, dass** das Verhältnis I/$\Phi$) der Fasern höchstens 500 beträgt.

5. Beton gemäß den Ansprüchen 1 bis 4, **dadurch gekennzeichnet, dass** die mittlere Haftspannung der Fasern in der gehärteten Zementmatrix wenigstens 2 MPa, vorzugsweise wenigstens 5 MPa, beträgt.

6. Beton gemäß einem der Ansprüche 1 bis 5, **dadurch gekennzeichnet, dass** die Zementmatrix zusätzlich wenigstens eine der folgenden Verbindungen enthält, deren Funktion es ist, die Haftung der Fasern in der Matrix zu erhöhen: Silikatverbindungen, die hauptsachlich Siliziumoxid umfassen, gefälltes Calciumcarbonat, Polyvinylalkohol in wässriger Losung, Phosphate, Latices, einen Entschäumer oder ein Gemisch dieser Verbindungen.

7. Beton gemäß Anspruch 6, **dadurch gekennzeichnet, dass** es sich bei der Silikatverbindung um Kieselhydrogel handelt, das mit einem Gehalt zwischen 0,1 und 5 Gew.-% als Trockengewicht in Bezug auf das Gesamtgewicht des Betons eingeführt wird.

8. Beton gemäß Anspruch 7, **dadurch gekennzeichnet, dass** das Kieselhydrogel in Form einer wässrigen Suspension in die Zusammensetzung eingeführt wird.

9. Beton gemäß einem der vorstehenden Ansprüche, **dadurch gekennzeichnet, dass** ein Teil der organischen Fasern durch Metallfasern ersetzt ist, wobei die Metallfasern vorzugsweise eine individuelle Lange von wenigstens 2 mm und ein Aspektverhältnis $\ell/\Phi$, (wobei $\Phi$ der Durchmesser der Fasern ist) von wenigstens 20 haben.

10. Beton gemäß einem der vorstehenden Ansprüche, **dadurch gekennzeichnet, dass** er eine Assoziation von kurzen und langen organischen und/oder Metallfasern umfasst.

11. Beton gemäß einem der Ansprüche 1 bis 10, **dadurch gekennzeichnet, dass** er Bestandteile umfasst, die die Zähigkeit der Matrix verbessern können und die ausgewählt sind aus nadelförmigen oder plattchenartigen Elementen mit einer mittleren Größe von höchstens 1 mm, die in einem Volumenanteil vorhanden sind, der zwischen 2,5 und 35% der Summe des Volumens der körnigen Elemente (b) und der puzzolanisch reagierenden Elemente (c) beträgt.

12. Beton gemäß Anspruch 11, **dadurch gekennzeichnet, dass** die Zähigkeit der Zementmatrix wenigstens 15 J/m$^2$ beträgt.

13. Beton gemäß einem der vorstehenden Ansprüche, **dadurch gekennzeichnet, dass** die Zähigkeit der Matrix durch Zugabe von Verstärkungen anisotroper Form mit einer mittleren Größe von höchstens 500 μm zu der Zementzusammensetzung erhalten wird.

14. Beton gemäß dem vorstehenden Anspruch, **dadurch gekennzeichnet, dass** die Verstärkungen in einem Volumenanteil vorhanden sind, der zwischen 5 und 25% der Summe des Volumens der körnigen Elemente (b) und, der puzzolanisch reagierenden Elemente (c) beträgt.

15. Beton gemäß einem der Ansprüche 11 bis 14, **dadurch gekennzeichnet, dass** die nadelförmigen Verstärkungen ausgewählt sind aus Wollastonitfasern, Bauxitfasern, Mullitfasern, Kaliumtitanatfasern, Siliziumcarbidfasern, Cellulose- oder Cellulosederivatfasern,. Kohlefasern, Calciumphosphatfasern, insbesondere aus Hydroxyapatit (HAP), Calciumcarbonatfasern, Glasfasern. (alkaliresistenten) oder davon abgeleiteten Produkten, die durch Mahlen der Fasern und der Gemische der Fasen erhalten werden, wobei auch kurze Fasern (Lange höchstens. 2 mm, vorzugsweise höchstens 1 mm) aus Polyvinylalkohol, Polyacrylonitril, Polyethylen hoher Dichte, Polyamid, Aramid oder-Polypropylen .sowie Materialien wie Stahlwolle vorhanden sein können.

16. Beton gemäß einem der Ansprüche 11 bis 14, **dadurch gekennzeichnet, dass** die Plattchen ausgewählt sind aus Glimmerplattchen, Talkplattchen, Plattchen aus gemischten Silicaten (Tonen), Vermiculitplättchen, Plättchen aus Aluminiumoxid und Aluminaten sowie den Gemischen dieser Plattchen.

17. Beton gemäß einem der Ansprüche 13 bis 16, **dadurch gekennzeichnet, dass** wenigstens ein Teil der Verstärkungen anisotroper Form eine polymere organische Beschichtung auf der Oberflache aufweist, die ausgehend von wenigstens einer der folgenden Verbindungen erhalten wird: Polyvinylalkohol, Silane, Silikonate, Siloxanharze, Polyorganosiloxane oder das Produkt der Reaktion zwischen (i) wenigstens einer Carbonsäure, die 3 bis 22 Kohlenstoffatome enthalt, (H) wenigstens einem polyfunktionellen aromatischen oder aliphatischen Amin oder substituierten Amin, das 2 bis 25 Kohlenstoffatome enthalt, und (iii) einem Vernetzungsmittel, bei dem es sich um einen wasserlöslichen Metallkomplex handelt, der wenigstens ein Metal enthalt, das ausgewählt ist aus Zink, Aluminium, Titan, Kupfer, Chrom, Eisen, Zirconium und Blei.

18. Beton gemäß einem der vorstehenden Ansprüche, **dadurch gekennzeichnet, dass** die Größe der körnigen Elemente (b) höchstens 500 μm beträgt.

19. Beton gemäß einem der vorstehenden Ansprüche, **dadurch gekennzeichnet, dass** die körnigen Elemente (b) feine Sande oder Gemische feiner Sande sind, die gesiebt oder gemahlen sind und vorteilhafterweise Kieselsande, insbesondere Quarzmehl umfassen können.

20. Beton gemäß einem, der vorstehenden Ansprüche, **dadurch gekennzeichnet, dass** die körnigen Elemente (b) in einer Menge von weise 25 bis 50 Gew.-%, der Zementmatrix vorhanden sind.

21. Beton gemäß einem der vorstehenden Ansprüche, **dadurch gekennzeichnet, dass** die feinen puzzolanisch reagierenden Elemente (c) Elemente aus der Gruppe umfassen, die aus Siliziumoxid, insbesondere Quarzstaub, Flugaschen und Hochofenschlacken besteht.

22. Beton gemäß einem der vorstehenden Ansprüche, **dadurch gekennzeichnet, dass** der Prozentgehalt des Wassers in Bezug auf die Summe der Gewichte des Zements (a) und der puzzolanisch reagierenden Elemente (c) zwischen 13 und 25% liegt.

23. Beton gemäß einem der vorstehenden Ansprüche, **dadurch gekennzeichnet, dass** er eine Zugfestigkeit im Direktzugtest von wenigstens 6 MPa aufweist.

24. Beton gemäß einem der vorstehenden Ansprüche, **dadurch gekennzeichnet, dass** er eine 4-Punkt-Biegefestigkeit von wenigstens 20 MPa aufweist.

25. Beton gemäß einem der vorstehenden Ansprüche, **dadurch gekennzeichnet, dass** er eine Druckfestigkeit von wenigstens 120 MPa und vorzugsweise 140 MPa aufweist.

26. Beton gemäß einem der vorstehenden Ansprüche, **dadurch gekennzeichnet, dass** er eine Reißenergie von wenigstens 2000 J/m$^2$ aufweist.

27. Beton gemäß einem der Ansprüche 1 bis 26, **dadurch gekennzeichnet, dass** er nach dem Abbinden einer Reifung bei einer Temperatur in der Nahe der Umgebungstemperatur, zum Beispiel bei 20°C, wahrend der Zeit, die notwendig ist, um die gewünschten mechanischen Eigenschaften zu erhalten, unterzogen wird.

28. Beton gemäß einem der Ansprüche 1 bis 27, **dadurch gekennzeichnet, dass** er nach dem Abbinden einer thermischen Behandlung zwischen 60°C und 100°C bei Normaldruck unterzogen wird.

29. Beton gemäß Anspruch 28, **dadurch gekennzeichnet, dass** die Dauer der thermischen Behandlung 6 Stunden bis 4 Tage, im Allgemeinen 6 S bis 72 S, beträgt.

30. Beton gemäß einem der Ansprüche 1 bis 29, **dadurch gekennzeichnet, dass** er im Verbund vorgespannt wird.

31. Beton gemäß einem der Ansprüche 1 bis 29, **dadurch gekennzeichnet, dass** er mit nachträglichem Verbund vorgespannt wird.

Figure 1 : Courbe type de traction directe d'un béton à caractère ductile

Figure 2 : Flexion 4 points. Comparaison fibres APV et fibres acier dans une matrice béton

e/c = 0,2 - Mûrissement : 20°C / 28jours

Figure 3 : Flexion 4 points. Comparaison fibres APV et fibres acier dans une matrice béton

e/c = 0,2 - Traitement thermique : 90°C / 48 H

Figure 4 : Traction directe. Béton renforcé par 4% vol. fibres APV

e/c = 0,2 - Mûrissement : 20°C / 28jours

Figure 5 : Traction directe. Béton renforcé par 4% vol. fibres APV

e/c = 0,2 - Traitement thermique : 90°C / 48h

Figure 6 : Traction directe. Béton renforcé par de la wollastonite et 4% vol. fibres APV

e/c = 0,24 - Mûrissement : 20°C / 28jours

Figure 7 : Flexion 3 points. Matrice béton renforcée par 4% vol. fibres APV .

e/c = 0,25 - Traitement thermique : 90°C / 48h

Figure 8 : Flexion 3 points. Matrice béton renforcée par 4% vol. fibres APV . Effet de la

longueur des fibres APV

e/c = 0,25 - Traitement thermique : 90°C / 48h

Figure 9 : Flexion 3 points. Matrice béton renforcée par 1% vol. fibres PEHD .

e/c = 0,25 - Traitement thermique : 90°C / 48h

Figure 10 : Flexion 3 points. Effet d'un mélange de fibres organiques. Matrice
béton renforcée par 4% vol. fibres APV : 2% vol. 1500 et 2% vol. 4000.
e/c = 0,25 - Traitement thermique : 90°C / 48h

Fig 11

Fig 12

Fig 13

Fig 14

*Fig 15*

Courbes Force-Déplacement : essais de pull-out.

APV : contrainte critique > 8 MPa (rupture du fil après déformation plastique importante)
PA : contrainte critique = 2,8MPa (glissement)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9501316 A

- WO 9601787 A

**Littérature non-brevet citée dans la description**

- **SRAWLEY J.E.** *International J. of Fracture,* 1976, vol. 12, 475-476